# EUROPEAN PATENT APPLICATION

(11) **EP 2 899 962 A1**
(43) Date of publication of application: **29.07.2015**
(21) Application number: 14152367.0
(22) Date of filing: 24.01.2014
(51) Int. Cl.: H04N 1/32

(54) **Method and apparatus for producing an enhanced image**

(71) Applicant: Nokia Technologies OY, 02610 Espoo (FI)
(72) Inventor: Lehtiniemi, Arto, 33880 Lempäälä (FI); Vilermo, Miikka, 37200 Siuro (FI); Laaksonen, Lasse, 37120 Nokia (FI); Tammi, Mikko, 33310 Tampere (FI)
(74) Representative: Nokia Corporation

(57) **Abstract**

A method comprising receipt of information indicative of a capture image from a camera module, determination of capture contextual information that comprises at least one categorical capture contextual information, identification of a recipient to receive a representation of the capture image, determination of recipient contextual information that comprises at least one categorical recipient contextual information, determination that the categorical capture contextual information differs from the categorical recipient contextual information beyond a categorical contextual information difference threshold, generation of a recipient image based, at least in part, on the capture image, such that the recipient image comprises a categorical contextual information difference indicator that is based, at least in part, on the categorical capture contextual information, and causation of sending of the recipient image to the recipient is disclosed.

## Description

### TECHNICAL FIELD

The present application relates generally to generation of a recipient image

### BACKGROUND

Electronic apparatuses have become a major part of the lives of their users. Many users rely on their electronic apparatuses to aid in various aspects of the user's life. For example, users may utilize an electronic apparatus to capture images, to share captured images, and/or the like. In many circumstances, a user may desire to enhance one or more environmental characteristics, contextual characteristics, etc. that may be depicted in a captured image, associated with a captured image, and/or the like. For example, it may be desirable to provide an electronic apparatus that is configured to provide a simple and intuitive manner for users to capture, share, and/or view captured images in an interesting and exciting manner.

### SUMMARY

Various aspects of examples of the invention are set out in the claims.

One or more embodiments may provide an apparatus, a computer readable medium, a non-transitory computer readable medium, a computer program product, and a method for receipt of information indicative of a capture image from a camera module, determination of capture contextual information that comprises at least one categorical capture contextual information indicative of environmental capture contextual information at a time of receipt of the capture image or activity capture contextual information at the time of receipt of the capture image, identification of a recipient to receive a representation of the capture image, determination of recipient contextual information that comprises at least one categorical recipient contextual information indicative of environmental recipient contextual information or activity recipient contextual information, determination that the categorical capture contextual information differs from the categorical recipient contextual information beyond a categorical contextual information difference threshold, generation of a recipient image based, at least in part, on the capture image, such that the recipient image comprises a categorical contextual information difference indicator that is based, at least in part, on the categorical capture contextual information, and causation of sending of the recipient image to the recipient.

One or more embodiments may provide an apparatus, a computer readable medium, a computer program product, and a non-transitory computer readable medium having means for receipt of information indicative of a capture image from a camera module, means for determination of capture contextual information that comprises at least one categorical capture contextual information indicative of environmental capture contextual information at a time of receipt of the capture image or activity capture contextual information at the time of receipt of the capture image, means for identification of a recipient to receive a representation of the capture image, means for determination of recipient contextual information that comprises at least one categorical recipient contextual information indicative of environmental recipient contextual information or activity recipient contextual information, means for determination that the categorical capture contextual information differs from the categorical recipient contextual information beyond a categorical contextual information difference threshold, means for generation of a recipient image based, at least in part, on the capture image, such that the recipient image comprises a categorical contextual information difference indicator that is based, at least in part, on the categorical capture contextual information, and means for causation of sending of the recipient image to the recipient.

One or more embodiments may provide an apparatus, the apparatus comprising at least one processor and at least one memory, and the memory comprising machine-readable instructions that, when executed, cause the apparatus to perform receipt of information indicative of a capture image from a camera module, determination of capture contextual information that comprises at least one categorical capture contextual information indicative of environmental capture contextual information at a time of receipt of the capture image or activity capture contextual information at the time of receipt of the capture image, identification of a recipient to receive a representation of the capture image, determination of recipient contextual information that comprises at least one categorical recipient contextual information indicative of environmental recipient contextual information or activity recipient contextual information, determination that the categorical capture contextual information differs from the categorical recipient contextual information beyond a categorical contextual information difference threshold, generation of a recipient image based, at least in part, on the capture image, such that the recipient image comprises a categorical contextual information difference indicator that is based, at least in part, on the categorical capture contextual information, and causation of sending of the recipient image to the recipient.

One or more embodiments may provide an apparatus, a computer readable medium, a non-transitory computer readable medium, a computer program product, and a method for receipt of information indicative of a capture image from a camera module, determination of capture contextual information that comprises at least one categorical capture contextual information indicative of environmental capture contextual information at a time of receipt of the capture image or activity capture contextual information at the time of receipt of the capture image, receipt of information indicative of a capture image display input that identifies the capture image, determination of recipient contextual information that comprises at least one categorical recipient contextual information indicative of environmental recipient contextual information at a time of receipt of the capture image display input or activity recipient contextual information at the time of receipt of the capture image display input, determination that the categorical capture contextual information differs from the categorical recipient contextual information beyond a categorical contextual information difference threshold, generation of a recipient image based, at least in part, on the capture image, such that the recipient image comprises a categorical contextual information difference indicator that is based, at least in part, on the categorical capture contextual information, and causation of display of the recipient image.

One or more embodiments may provide an apparatus, a computer readable medium, a computer program product, and a non-transitory computer readable medium having means for receipt of information indicative of a capture image from a camera module, means for determination of capture contextual information that comprises at least one categorical capture contextual information indicative of environmental capture contextual information at a time of receipt of the capture image or activity capture contextual information at the time of receipt of the capture image, means for receipt of information indicative of a capture image display input that identifies the capture image, means for determination of recipient contextual information that comprises at least one categorical recipient contextual information indicative of environmental recipient contextual information at a time of receipt of the capture image display input or activity recipient contextual information at the time of receipt of the capture image display input, means for determination that the categorical capture contextual information differs from the categorical recipient contextual information beyond a categorical contextual information difference threshold, means for generation of a recipient image based, at least in part, on the capture image, such that the recipient image comprises a categorical contextual information difference indicator that is based, at least in part, on the categorical capture contextual information, and means for causation of display of the recipient image.

One or more embodiments may provide an apparatus, the apparatus comprising at least one processor and at least one memory, and the memory comprising machine-readable instructions that, when executed, cause the apparatus to perform receipt of information indicative of a capture image from a camera module, determination of capture contextual information that comprises at least one categorical capture contextual information indicative of environmental capture contextual information at a time of receipt of the capture image or activity capture contextual information at the time of receipt of the capture image, receipt of information indicative of a capture image display input that identifies the capture image, determination of recipient contextual information that comprises at least one categorical recipient contextual information indicative of environmental recipient contextual information at a time of receipt of the capture image display input or activity recipient contextual information at the time of receipt of the capture image display input, determination that the categorical capture contextual information differs from the categorical recipient contextual information beyond a categorical contextual information difference threshold, generation of a recipient image based, at least in part, on the capture image, such that the recipient image comprises a categorical contextual information difference indicator that is based, at least in part, on the categorical capture contextual information, and causation of display of the recipient image.

One or more example embodiments further perform causation of display of the recipient image on a display.

One or more example embodiments further perform receipt of information indicative of a recipient image acceptance input, wherein the causation of sending of the recipient image to the recipient is based, at least in part, on the recipient image acceptance input.

One or more example embodiments further perform receipt of information indicative of a categorical contextual information difference indicator adjustment input, wherein the recipient image is based, at least in part, on the categorical contextual information difference indicator adjustment input.

One or more example embodiments further perform causation of display of a categorical contextual information difference indicator adjustment interface in relation to the recipient image, wherein the categorical contextual information difference indicator adjustment input is at a position on the display that at least partially corresponds with a display position of the categorical contextual information difference indicator adjustment interface on the display.

One or more example embodiments further perform causation of sending of auditory information to the recipient, wherein the auditory information is associated with the categorical capture contextual information.

One or more example embodiments further perform identification of the auditory information based, at least in part, on the categorical capture contextual information.

In at least one example embodiment, the categorical contextual information difference threshold is associated with a category, the categorical capture contextual information is associated with the category, and the categorical recipient contextual information is associated with the category.

In at least one example embodiment, the capture contextual information comprises another categorical capture contextual information associated with another category and the recipient contextual information comprises another categorical recipient contextual information associated with the other category, wherein the embodiment further performs determination that the other categorical capture contextual information fails to differ from the other categorical recipient contextual information beyond another categorical contextual information difference threshold associated with the other category. In such an example embodiment, the generation of the recipient image is performed such that the recipient image fails to comprise another categorical contextual information difference indicator that is based, at least in part, on the other categorical capture contextual information.

In at least one example embodiment, the other category is different from the category.

One or more example embodiments further perform identification of another recipient to receive another representation of the capture image, determination of another recipient contextual information that comprises another categorical recipient contextual information indicative of another environmental recipient contextual information or another activity recipient contextual information and a different categorical recipient contextual information indicative of a different environmental recipient contextual information or a different activity recipient contextual information, such that the other categorical recipient contextual information is associated with the category and the different categorical recipient contextual information is associated with a different category, and causation of sending of the recipient image to the other recipient.

In at least one example embodiment, the generation of the recipient image omits a different categorical contextual information difference indicator that is based, at least in part, on the different categorical recipient contextual information.

In at least one example embodiment, the omission of the different categorical contextual information difference indicator is based, at least in part, on the different category being different from the category.

One or more example embodiments further perform identification of another recipient to receive another representation of the capture image, determination of another recipient contextual information that comprises another categorical recipient contextual information indicative of another environmental recipient contextual information or another activity recipient contextual information, and determination that the categorical capture contextual information fails to differ from the other categorical recipient contextual information beyond another categorical contextual information difference threshold.

One or more example embodiments further perform causation of sending the capture image to the recipient.

One or more example embodiments further perform preclusion of generation of another recipient image based, at least in part, on the determination that the categorical capture contextual information fails to differ from the other categorical recipient contextual information beyond the other categorical contextual information difference threshold.

One or more example embodiments further perform preclusion of causation of sending the capture image to the recipient based, at least in part, on the determination that the categorical capture contextual information fails to differ from the other categorical recipient contextual information beyond the other categorical contextual information difference threshold.

One or more example embodiments further perform receipt of information indicative of a capture image display input identifying the capture image, determination of another recipient contextual information that comprises another categorical recipient contextual information indicative of another environmental recipient contextual information or another activity recipient contextual information, determination that the categorical capture contextual information differs from the other categorical recipient contextual information beyond another categorical contextual information difference threshold, generation of another recipient image based, at least in part, on the capture image, such that the recipient image comprises another categorical contextual information difference indicator that is based, at least in part, on the categorical capture contextual information, and causation of display of the recipient image.

In at least one example embodiment, the camera module is comprised by an apparatus, and the causation of display of the recipient image comprises display of the recipient image by the apparatus.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to an example embodiment;
FIGURE 2 is a block diagram showing apparatus communication according to at least one example embodiment;
FIGURE 3 is a block diagram showing categorical contextual information tables according to at least one example embodiment;
FIGURES 4A-4E are illustrations showing a capture image and recipient images according to at least one example embodiment;
FIGURES 5A-5B are illustrations showing a categorical contextual information difference indicator adjustment input according to at least one example embodiment;
FIGURE 6 is a flow diagram illustrating activities associated with causation of sending of a recipient image to a recipient according to at least one example embodiment;
FIGURE 7 is a flow diagram illustrating activities associated with causation of sending of a recipient image to a recipient according to at least one example embodiment;
FIGURE 8 is a flow diagram illustrating activities associated with causation of sending of a recipient image to a recipient according to at least one example embodiment;
FIGURE 9 is a flow diagram illustrating activities associated with causation of sending of a recipient image to a recipient according to at least one example embodiment; and
FIGURE 10 is a flow diagram illustrating activities associated with causation of display of a recipient image according to at least one example embodiment.

### DETAILED DESCRIPTION OF THE DRAWINGS

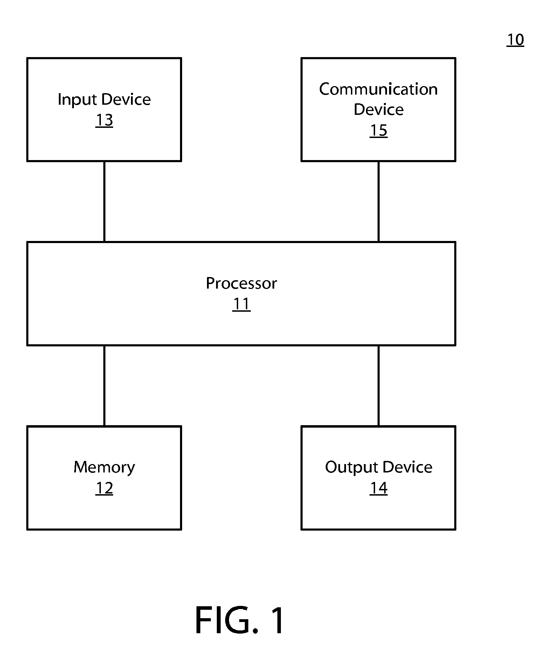

An embodiment of the invention and its potential advantages are understood by referring to FIGURES 1 through 10 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, an automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

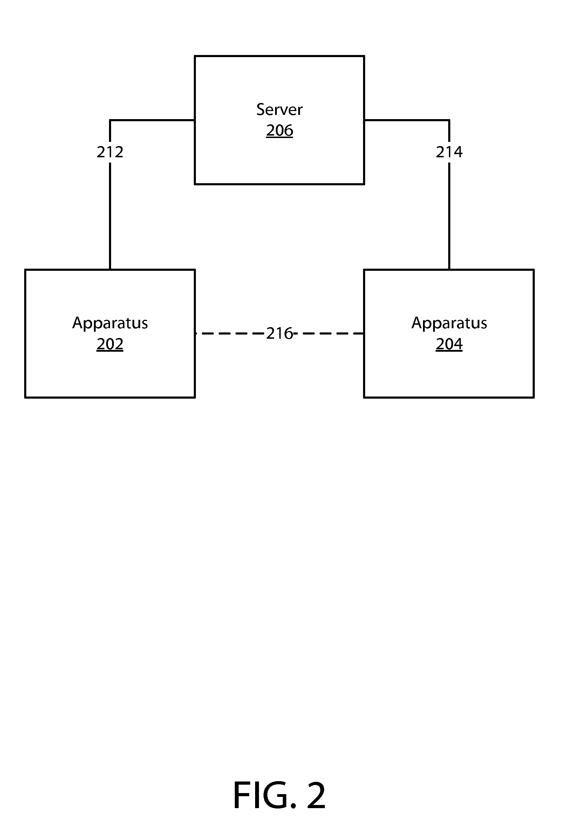

FIGURE 2 is a diagram illustrating apparatus communication according to at least one example embodiment. The example of FIGURE 2 is merely an example and does not limit the scope of the claims. For example, communication paths may vary, apparatus count may vary, server count may vary, and/or the like.

FIGURE 2 is a diagram illustrating apparatus communication according to at least one example embodiment. The example of FIGURE 2 illustrates apparatus 202 in communication with server 206 by way of communication channel 212 and apparatus 204 in communication with server 206 by way of communication channel 214. It should be understood that, even though FIGURE 2 illustrates communication channel 216 between apparatus 202 and apparatus 204, apparatus 202 and apparatus 204 may communicate indirectly via one or more separate apparatuses. For example, apparatus 202 may indirectly communicate with apparatus 204 via server 206 by way of communication channels 212 and 214, and apparatus 204 may indirectly communicate with apparatus 202 via server 206 by way of communication channels 214 and 212. For example, apparatus 202 may cause sending of information to apparatus 204 by way of communication channel 216, apparatus 202 may receive information from apparatus 204 by way of server 206, server 206 may receive information sent from apparatus 202, and/or the like.

It should be understood that, even though FIGURE 2 illustrates a direct connection between apparatus 202 and server 206, and between apparatus 204 and server 206, there may be intermediate apparatuses that facilitate communication between apparatus 202 and server 206, and/or between apparatus 204 and server 206. For example, there may be one or more routers, hubs, switches, gateways, and/or the like, that are utilized in the communication channels between apparatus 202 and server 206, and/or between apparatus 204 and server 206. In addition, there may be other separate apparatuses that apparatus 202, apparatus 204, and/or server 206 are in communication with. For example, apparatus 202, apparatus 204, and/or server 206 may be in communication with a different server, another separate apparatus, and/or the like.

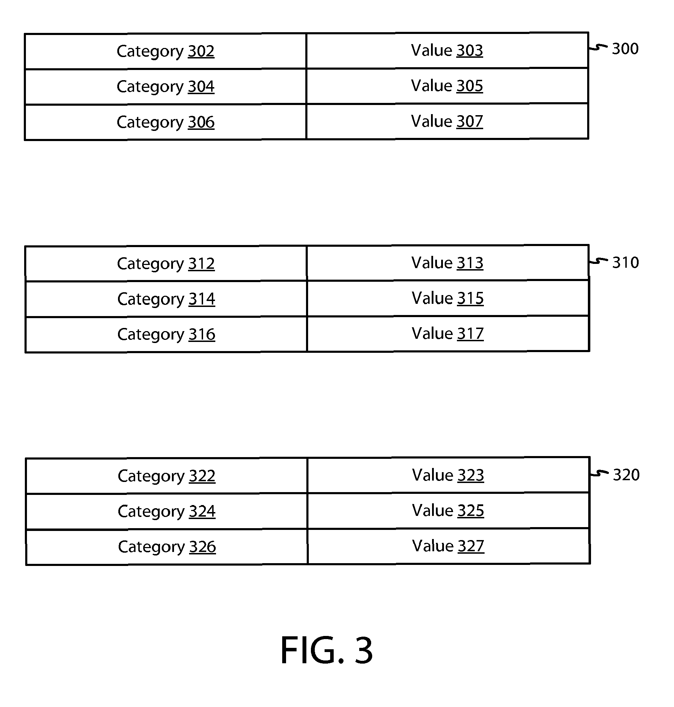

FIGURE 3 is a block diagram showing categorical contextual information tables according to at least one example embodiment. The example of FIGURE 3 is merely an example and does not limit the scope of the claims. For example, categorical contextual information table content may vary, categorical contextual information table structure may vary, categories may vary, and/or the like.

As electronic apparatuses become more prevalent and pervasive, many users increasingly utilize their electronic apparatus to manage various aspects of their lives, to capture images, to share pictures, to view photographs, to recall prior experiences, and/or the like. For example, a user may travel from to the Caribbean on holiday in order to temporarily escape the frigid winter back home. In many circumstances, the user may desire to recollect and/or relive various aspects of the user's holiday in the Caribbean at some point in the future. As such, it may be desirable to configure an apparatus such that the apparatus may be aware of various information regarding the surroundings of the apparatus, regarding the user, regarding the usage of the apparatus, and/or the like. In at least one example embodiment, an apparatus determines contextual information that comprises at least one categorical contextual information. In at least one example embodiment, the contextual information is information that identifies one or more elements of the context associated with use of the apparatus.

In at least one example embodiment, the contextual information is associated with a certain category of contextual information, type of contextual information, and/or the like. For example, the contextual information may be categorical contextual information. In such an example, the categorical contextual information may be indicative of environmental contextual information, activity contextual information, and/or the like.

In at least one example embodiment, the contextual information is environmental contextual information. For example, the environmental contextual information may be information that indicates one or more elements of the environmental context in which the apparatus is being utilized, interacted with, and/or the like. The environmental contextual information may be non-locational environmental contextual information, locational environmental contextual information, and/or the like. In at least one example embodiment, the non-locational environmental contextual information is at least one of weather contextual information, temperature contextual information, social contextual information, crowdedness contextual information, auditory contextual information, time contextual information, or mood contextual information.

In at least one example embodiment, the contextual information is associated with a weather category. As such, the contextual information may be weather contextual information. Weather contextual information may indicate the weather at a particular time of day, while interacting with the apparatus, and/or the like. For example, the weather contextual information may indicate that the sun is shining, that it is raining, that there is hanging fog, that the sky is cloudy, that there are ongoing thunderstorms, that there is severe weather, and/or the like. In at least one example embodiment, an apparatus determines the weather contextual information by way of a weather service. For example, the apparatus may send a request for weather contextual information to a weather service, and receive the weather contextual information from the weather service.

In at least one example embodiment, the contextual information is associated with a temperature category. As such, the contextual information may be temperature contextual information. Temperature contextual information may indicate the temperature at a particular time of day, while interacting with the apparatus, and/or the like. For example, the temperature contextual information may indicate that it is below freezing, that it is 32 degrees Celsius, and/or the like. In at least one example embodiment, an apparatus determines the temperature contextual information by way of one or more temperature services. For example, the apparatus may send a request for temperature contextual information to a temperature service, and receive the temperature contextual information from the temperature service. In at least one example embodiment, an apparatus determines the temperature contextual information by way of one or more temperature sensors. The temperature sensor may be comprised by the apparatus, comprised by a separate apparatus, and/or the like. In such an example embodiment, the apparatus may receive temperature contextual information from the temperature sensor.

In at least one example embodiment, the contextual information is associated with a social category. As such, the contextual information may be social contextual information. Social contextual information may indicate that one or more persons are proximate to a user of the apparatus, may identify one or more persons that are proximate to the user of the apparatus, and/or the like. For example, the social contextual information may indicate that the user is conversing with John Smith, the user is sitting at a table with other persons, and/or the like. In at least one example embodiment, an apparatus determines the social contextual information by way of visual information. For example, the apparatus may identify a person by way of visual information that comprises a representation of the person via facial recognition, image recognition, and/or the like. In at least one example embodiment, an apparatus determines the social contextual information by way of auditory information. For example, the apparatus may identify a person by way of auditory information via voice recognition, auditory identification cues, and/or the like.

In at least one example embodiment, the contextual information is associated with a crowdedness category. As such, the contextual information may be crowdedness contextual information. Crowdedness contextual information may indicate a number of persons that are proximate to a user of the apparatus, may indicate that the user is in a crowded area, may indicate that the user is in an uncrowded area, and/or the like. In at least one example embodiment, an apparatus determines the crowdedness contextual information by way of one or more crowdedness services. For example, the apparatus may send a request for crowdedness contextual information to a crowdedness service, and receive the crowdedness contextual information from the crowdedness service. For example, the apparatus may identify the location of the apparatus and the time of day in the request to the crowdedness service, and receive crowdedness contextual information indicative of an average level of crowdedness at the time of day at the location. In at least one example embodiment, an apparatus determines the crowdedness contextual information by way of visual information. For example, the apparatus may identify a number of persons proximate to the user of the apparatus by way of visual information that comprises a representation of at least a portion of the surroundings of the user via facial recognition, image recognition, and/or the like. In at least one example embodiment, an apparatus determines the crowdedness contextual information by way of auditory information. For example, the apparatus may identify a number of persons proximate to the user of the apparatus by way of auditory information that comprises via sound recognition, voice recognition, and/or the like.

In at least one example embodiment, the contextual information is associated with an auditory category. As such, the contextual information may be auditory contextual information. Auditory contextual information may indicate a general volume associated with the surroundings of a user of the apparatus, may identify a particular sound, and/or the like. For example, the auditory contextual information may indicate that the user is in a loud setting, that the user is in a quiet setting, that the background level of noise is approximately 42 decibels, and/or the like. In another example, the auditory contextual information may identify music that is being played near the user of the apparatus, may identify the sound of ocean waves, may identify the sound of a bird squawking, and/or the like. In at least one example embodiment, an apparatus determines the auditory contextual information by way of auditory information. For example, the apparatus may identify a particular sound by way of auditory information via auditory recognition, sound recognition, and/or the like. The auditory information may be received from an auditory sensor, for example, a microphone. In such an example, the microphone may be comprised by the apparatus, a separate apparatus, and/or the like.

In at least one example embodiment, the contextual information is associated with a time category. As such, the contextual information may be time contextual information. Time contextual information may indicate a time of day, a day of the week, a month, a year, and/or the like. For example, the time contextual information may indicate that the time of day is 18:37, the time of day corresponds with dawn, the time of day corresponds with evening, and/or the like. In at least one example embodiment, an apparatus determines the time contextual information by way of one or more time services. For example, the apparatus may send a request for time contextual information to a time service, and receive the time contextual information from the time service. In at least one example embodiment, an apparatus determines the time contextual information by way of a hardware clock, a software clock, a hardware timer, a software timer, and/or the like. For example, the apparatus may determine the time contextual information by way of one or more hardware clocks comprised by the apparatus.

In at least one example embodiment, the contextual information is associated with a mood category. As such, the contextual information may be mood contextual information. Mood contextual information may indicate a mood of the user of the apparatus, the mood of another person associated and/or proximate to the user of the apparatus, and/or the like. For example, the mood contextual information may indicate that the user is happy, that the user is surprised, that the person sitting next to the user is relaxed, and/or the like. In at least one example embodiment, an apparatus determines the mood contextual information by way of one or more mood services, social networks, and/or the like. For example, the apparatus may send a request for mood contextual information to a mood service, and receive the mood contextual information from the mood service.

In some circumstances, it may be desirable to configure an apparatus such that the apparatus may determine contextual information associated with geographical location. For example, a user of the apparatus may desire the apparatus to be aware of one or more aspects associated with the location of the user, the location of the apparatus, and/or the like. In at least one example embodiment, the environmental contextual information is locational environmental contextual information. In at least one example embodiment, the locational environmental contextual information is at least one of location contextual information or altitude contextual information.

In at least one example embodiment, the contextual information is associated with a location category. As such, the contextual information may be location contextual information. Location contextual information may indicate the geographical location, a country, a city, and/or the like. For example, the location contextual information may indicate that a user is in the Caribbean, may identify a set of global position system coordinates associated with the location of the apparatus, and/or the like. In at least one example embodiment, an apparatus determines the location contextual information by way of one or more location services. For example, the apparatus may send a request for location contextual information to a location service, and receive the location contextual information from the location service. In at least one example embodiment, an apparatus determines the location contextual information by way of a global position system, a radio frequency triangulation position system, and/or the like. The apparatus may comprise one or more location sensors, for example, a global positioning system sensor, a radio frequency sensor, and/or the like. The location sensor may be comprised by the apparatus, comprised by a separate apparatus, and/or the like. In such an example embodiment, the apparatus may receive location contextual information from the location sensor.

In at least one example embodiment, the contextual information is associated with an altitude category. As such, the contextual information may be altitude contextual information. Altitude contextual information may indicate the altitude of an apparatus. For example, the altitude contextual information may indicate that the apparatus is above sea level, below sea level, 1174 meters above sea level, and/or the like. In at least one example embodiment, an apparatus determines the altitude contextual information by way of one or more altitude services. For example, the apparatus may send a request for altitude contextual information to an altitude service, and receive the altitude contextual information from the altitude service. For example, the apparatus may identify the location of the apparatus in the request to the altitude service, and receive altitude contextual information corresponding with the location of the apparatus. In at least one example embodiment, an apparatus determines the altitude contextual information by way of an altitude sensor. For example, the apparatus may comprise one or more altitude sensors, for example, an altimeter, a pressure sensor, and/or the like. The altitude sensor may be comprised by the apparatus, comprised by a separate apparatus, and/or the like. In such an example embodiment, the apparatus may receive altitude contextual information from the altitude sensor.

In at least one example embodiment, the contextual information is activity contextual information. For example, the activity contextual information may be information that indicates one or more elements of the activity context in which the apparatus is being utilized, interacted with, and/or the like. For example, the activity contextual information may be indicative of one or more aspects and/or characteristics of a user of the apparatus, the actions of the user of the apparatus, and/or the like. In at least one example embodiment, the activity contextual information is at least one of speed contextual information, hurriedness contextual information, or action contextual information.

In at least one example embodiment, the contextual information is associated with a speed category. As such, the contextual information may be speed contextual information. Speed contextual information may indicate a speed at which the apparatus is traveling, a speed at which the user carrying the apparatus is traveling, a velocity of the user of the apparatus, and/or the like. For example, the speed contextual information may indicate that the apparatus is stationary, the user of the apparatus is stationary, the user of the apparatus is moving slowly, the apparatus is moving quickly, the user of the apparatus is traveling at 37 kilometers per hour, the apparatus is traveling in a northwest direction at 17 knots, and/or the like. In at least one example embodiment, an apparatus determines the speed contextual information by way of one or more speed sensors. The apparatus may comprise one or more speed sensors, for example, a global positioning system sensor, a pedometer sensor, a bicycle speed sensor, and/or the like. The speed sensor may be comprised by the apparatus, comprised by a separate apparatus, and/or the like. In such an example embodiment, the apparatus may receive speed contextual information from the speed sensor.

In at least one example embodiment, the contextual information is associated with a hurriedness category. As such, the contextual information may be hurriedness contextual information. Hurriedness contextual information may indicate a general level of activity a user of the apparatus is experiencing at a certain time, within a certain time period, and/or the like. For example, the hurriedness contextual information may indicate that the user of the apparatus has an open schedule, that the user's calendar is booked for the next week, and/or the like. In at least one example embodiment, an apparatus determines the hurriedness contextual information by way of one or more calendar services, schedule services, and/or the like. For example, the apparatus may send a request for hurriedness contextual information to a calendar service, and receive the hurriedness contextual information from the calendar service.

In at least one example embodiment, the contextual information is associated with an action category. As such, the contextual information may be action contextual information. Action contextual information may indicate an action being performed by a user of the apparatus, an activity that the user is engaged in, and/or the like. For example, the action contextual information may indicate that the user is walking, that the user is riding a bicycle, that the user is running, that the user is stationary, that the user is reclining, and/or the like. In at least one example embodiment, an apparatus determines the action contextual information by way of one or more speed sensors, motion sensors, orientation sensors, and/or the like. For example, the apparatus may comprise one or more motion sensors, for example an accelerometer, and may determine that the user is walking slowly based, at least in part, on information received from the accelerometer. In another example, information received from an orientation sensor may indicate that the user is laying in a reclined position.

In many circumstances, it may be desirable to store contextual information in one or more categorical contextual information tables. In at least one example embodiment, contextual information is indicative of a set of contextual circumstances as they existed at a particular point in time. For example, a point in time and a different point in time may be associated with different contextual circumstances. As such, it may be desirable to store contextual information in such a way that allows for subsequent review, subsequent retrieval, and/or the like. In at least one example embodiment, contextual information is stored in one or more categorical contextual information tables. The categorical contextual information table may comprise information indicative of categorical contextual information, one or more categories associated with the categorical contextual information, one or more values indicated by the categorical contextual information and/or the like.

FIGURE 3 is a block diagram showing categorical contextual information tables according to at least one example embodiment. The example of FIGURE 3 depicts categorical contextual information table 300, categorical contextual information table 310, and categorical contextual information table 320. In the example of FIGURE 3, categories 302, 304, 306, 312, 314, 316, 322, 324, and 326 indicate a specific category of categorical contextual information, and values 303, 305, 307, 313, 315, 317, 323, 325, and 327 indicate a specific value associated with the respective category of categorical contextual information.

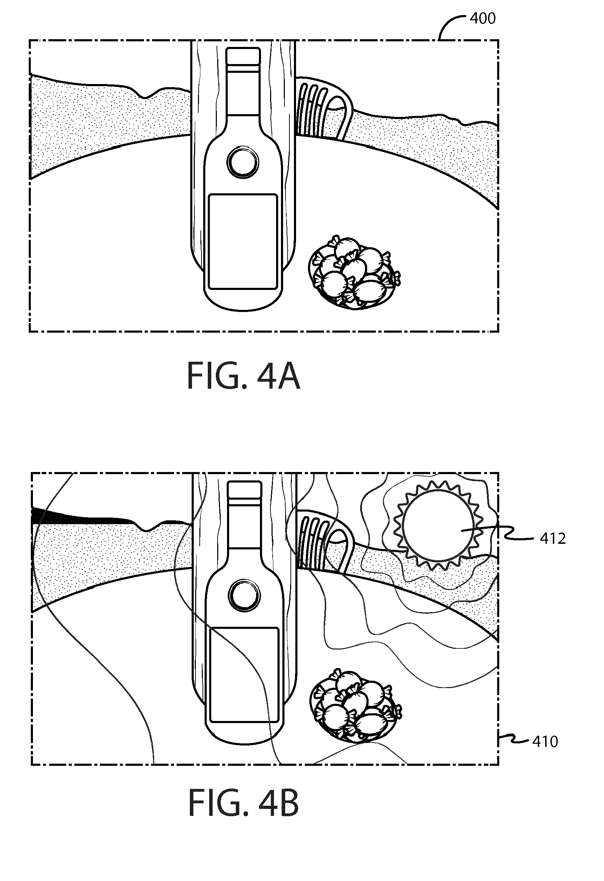

For example, category 302 may indicate temperature contextual information, and value 303 may indicate a temperature of 32 degrees Celsius. In such an example, the apparatus may have determined the temperature contextual information by way of a temperature service, a temperature sensor, and/or the like. In another example, category 314 may indicate a weather contextual information, and value 315 may indicate cloudy conditions. In such an example, the apparatus may have determined the weather contextual information by way of a weather service. In yet another example, category 326 may indicate crowdedness contextual information, and value 327 may indicate that there are few persons located in the area surrounding the apparatus. In such an example, the apparatus may have determined the crowdedness contextual information by way of crowdedness service, visual information, auditory information, and/or the like. FIGURES 4A-4E are illustrations showing a capture image and recipient images according to at least one example embodiment. The examples of FIGURES 4A-4E are merely examples and do not limit the scope of the claims. For example, capture image may vary, recipient images may vary, categorical contextual information difference indicators may vary, and/or the like.

As electronic apparatuses become more prevalent and pervasive, many users increasingly utilize their electronic apparatus to capture images, to share pictures, to view photographs, to recall prior experiences, and/or the like. For example, as discussed previously, a user may travel from to the Caribbean on holiday in order to temporarily escape the frigid winter back home. In such circumstances, the user may desire to recollect and/or relive various aspects of the user's holiday in the Caribbean at some point in the future. In at least one example embodiment, an apparatus receives information indicative of a capture image from a camera module. The capture image may be an image, a photograph, viewfinder information, and/or the like. The camera module may be comprised by the apparatus, a separate apparatus, and/or the like.

FIGURE 4A is an illustration showing a capture image according to at least one example embodiment. The example of FIGURE 4A depicts capture image 400. As can be seen, capture image 400 depicts a bowl of chocolates and a wine bottle setting on a table that is located on a beach, near the ocean. In the example of FIGURE 4A, a user of an apparatus may have traveled to the Caribbean on holiday. In such an example, while sitting at a table on the beach, the user may have captured capture image 400 via a camera module comprised by the apparatus.

In many circumstances, it may be desirable to associate a capture image with contextual information. For example, a user may desire to more fully relive the subject matter depicted in the capture image by way of recollecting additional contextual information associated with the capture image. In at least one example embodiment, contextual information pertaining to a capture image is capture contextual information. In such an example embodiment, categorical contextual information pertaining to a capture image is categorical capture contextual information, environmental contextual information pertaining to a capture image is environmental capture contextual information, and activity contextual information pertaining to a capture image is activity capture contextual information. In at least one example embodiment, an apparatus determines capture contextual information that comprises at least one categorical capture contextual information. The categorical capture contextual information may be indicative of environmental capture contextual information at a time of receipt of the capture image or activity capture contextual information at the time of receipt of the capture image. For example, the categorical capture contextual information indicative of environmental capture contextual information at a time of receipt of the capture image may be environmental capture contextual information at a time that is chronologically proximate to a time of receipt of the capture image such that the environmental capture contextual information is indicative of the environmental capture contextual information at a time of receipt of the capture image. For example, the environmental capture contextual information may be from a time that is before the time of receipt of the capture image, after the time of receipt of the capture image, and/or the like. In such an example, environmental capture contextual information received before the time of receipt of the capture image may be treated as valid until different and/or updated environmental capture contextual information is determined, received, and/or the like.

For example, capture image 400 of FIGURE 4A may be associated with various capture contextual information. For example, capture image 400 may be associated with categorical contextual information table 300 of FIGURE 3. For example, capture image 400 may be associated with temperature contextual information that indicates a 32 degree Celsius temperature, weather contextual information that indicates a clear and sunny sky, and crowdedness contextual information that indicates that the beach is crowded with people enjoying the view of the ocean.

In many circumstances, the user may desire to share a representation of a capture image with another person. For example, while on holiday, the user may desire to share capture image 400 of FIGURE 4A with a friend back home, a colleague, a family member, via email, via one or more social network, and/or the like. In at least one example embodiment, an apparatus identifies a recipient to receive a representation of a capture image. For example, the apparatus may receive information indicative of an identity of the recipient, the apparatus may select a recipient, a user of the apparatus may indicate the recipient, and/or the like. The representation of the capture image may comprise visual information that at least partially corresponds with the capture image. In at least one example embodiment, the recipient is a recipient apparatus. For example, although a user of an apparatus may indicate a person to receive the representation of the capture image, the recipient may be a separate apparatus belonging to the person, utilized by the person, owned by the person, associated with the person, and/or the like.

In many circumstances, when a user shares a capture image, the capture image is accompanied by descriptive text. For example, the descriptive text may indicate various contextual information associated with the capture image. For example, capture image 400 of FIGURE 4A may be accompanied by a descriptive text caption that reads, "32 degrees Celsius and in the sun!" In such circumstances, a user may desire to emphasize interesting and/or relevant capture contextual information without having to resort to creating a descriptive text caption for every capture image. In such circumstances, a user may desire to share a modified version of the capture image with the recipient such that the modified version of the capture image emphasizes capture contextual information that may be especially appealing to the user, particularly relevant the recipient, and/or the like. For example, a different image that emphasizes various capture contextual information that may be relevant and/or interesting to the recipient may be generated based, at least in part, on the capture image. In such an example, the user may desire to generate a recipient image based, at least in part, on the capture image, such that the recipient image accentuates capture contextual information that is unique, emphasizes capture contextual information that is different from contextual information associated with the recipient, and/or the like.

In order to facilitate the generation of an interesting recipient image for the recipient, it may be desirable to determine contextual information associated with an identified recipient. For example, in order to facilitate generation of a recipient image that accentuates capture contextual information that is unique, emphasizes capture contextual information that is different from contextual information associated with the recipient, and/or the like, it may be desirable to determine contextual information associated with the recipient. In at least one example embodiment, contextual information associated with the recipient is recipient contextual information and categorical contextual information associated with the recipient is categorical recipient contextual information. In such an example embodiment, environment contextual information associated with the recipient is environmental recipient contextual information, and activity contextual information associated with the recipient is activity recipient contextual information. In at least one example embodiment, an apparatus determines recipient contextual information that comprises at least one categorical recipient contextual information indicative of environmental recipient contextual information or activity recipient contextual information. In such an example embodiment, recipient contextual information is contextual information associated with the recipient and/or the recipient's apparatus at the time of determination of the recipient contextual information. In at least one example embodiment, determination of the recipient contextual information comprises receipt of information indicative of predetermined recipient contextual information. For example, the predetermined recipient contextual information may have been determined at a time prior to determination of the recipient contextual information and/or the receipt of information indicative of the predetermined recipient contextual information.

For example, as illustrated in the example of FIGURE 3, categorical contextual information table 310 may be a categorical contextual information table associated with a recipient. For example, category 312 may be temperature contextual information and value 313 may indicate a 31 degree Celsius temperature, category 314 may be weather contextual information and value 315 may indicate a dark and cloudy sky, and category 316 may be crowdedness contextual information and value 317 may indicate that the recipient is in a sparely populated region. In at least one example embodiment, determination of the recipient contextual information comprises sending of a request for recipient contextual information to the recipient, and receipt of information indicative of the recipient contextual information from the recipient.

In order to facilitate generation of a recipient image that may further emphasize capture contextual information that is different from the recipient contextual information, it may be desirable to emphasize categorical capture contextual information that differs greatly from corresponding categorical recipient contextual information, and to avoid emphasizing categorical capture contextual information that fails to differ greatly from corresponding categorical recipient contextual information. In at least one example embodiment, an apparatus determines that a categorical capture contextual information differs from a categorical recipient contextual information beyond a categorical contextual information difference threshold. In at least one example embodiment, the categorical contextual information difference threshold is an amount of difference between a categorical capture contextual information and a corresponding categorical recipient contextual information, beyond which, the categorical contextual information difference threshold is satisfied. In such an example embodiment, the apparatus may generate a recipient image based, at least in part, on the capture image. For example, the recipient image may comprise a categorical contextual information difference indicator based, at least in part, on the determination that the categorical capture contextual information differs from the categorical recipient contextual information beyond the categorical contextual information difference threshold. In such an example, the categorical contextual information difference indicator may be based, at least in part, on the associated categorical capture contextual information, categorical contextual information difference threshold, and/or the like. In at least one example embodiment, the categorical contextual information difference indicator is visual information comprised by the recipient image that is indicative of the categorical capture contextual information.

In at least one example embodiment, the contextual information is weather contextual information. In such an example embodiment, the categorical contextual information difference threshold associated with weather contextual information may be an amount of difference between a weather capture contextual information and a weather recipient contextual information, beyond which, the recipient image is generated such that the recipient image comprises a categorical contextual information difference indicator associated with the weather capture contextual information. For example, comparing mist and light rain may fail to satisfy the categorical contextual information difference threshold associated with weather contextual information, and comparing a sunny sky to a thunderstorm may satisfy the categorical contextual information difference threshold associated with weather contextual information. The categorical contextual information difference indicator associated with weather contextual information may comprise visual information that depicts a sun, a cloud, a lightning bolt, a blizzard, a snow flake, a clear night sky, a rainbow, and/or the like. As such, the weather contextual information difference indicator may indicate the weather capture contextual information by way of visual information comprised by the recipient image. In at least one example embodiment, the weather capture contextual information is associated with auditory information in addition to the corresponding categorical contextual information difference indicator. For example, the auditory information associated with the weather capture contextual information may be auditory information indicative of rain falling, of thunder, of birds chirping, and/or the like.

FIGURE 4B is an illustration showing a recipient image according to at least one example embodiment. In at least one example embodiment, recipient image 410 was generated based, at least in part, on capture image 400 of FIGURE 4A. For example, recipient image 410 may represent capture image 400 of FIGURE 4A subsequent to the addition of categorical contextual information difference indicator 412. As can be seen in the example of FIGURE 4B, categorical contextual information difference indicator 412 comprises visual information indicative of a sun and a radiant glow effect that spans the entirety of recipient image 410. In at least one example embodiment, capture image 400 of FIGURE 4A is associated with categorical contextual information table 300 of FIGURE 3, and recipient image 410 of FIGURE 4B is associated with categorical contextual information table 310 of FIGURE 3. In such an example embodiment, category 304 of FIGURE 3 may be weather capture contextual information that indicates value 305 of FIGURE 3, bright and sunny skies. In such an example embodiment, category 314 of FIGURE 3 may be weather recipient contextual information that indicates value 315 of FIGURE 3, dark and stormy skies. In such an example embodiment, recipient image 410 may comprise categorical contextual information difference indicator 412 based, at least in part, on the determination that value 305 of FIGURE 3 differs from value 315 of FIGURE 3 beyond the categorical contextual information difference threshold. In at least one example embodiment, the level of emphasis placed on categorical contextual information difference indicator 412 may be based, at least in part, on a magnitude of difference between value 305 of FIGURE 3 and value 315 of FIGURE 3. As such, a smaller difference between value 305 of FIGURE 3 and value 315 of FIGURE 3 may result in a lower level of emphasis placed on categorical contextual information difference indicator 412, and a larger difference between value 305 of FIGURE 3 and value 315 of FIGURE 3 may result in a higher level of emphasis placed on categorical contextual information difference indicator 412.

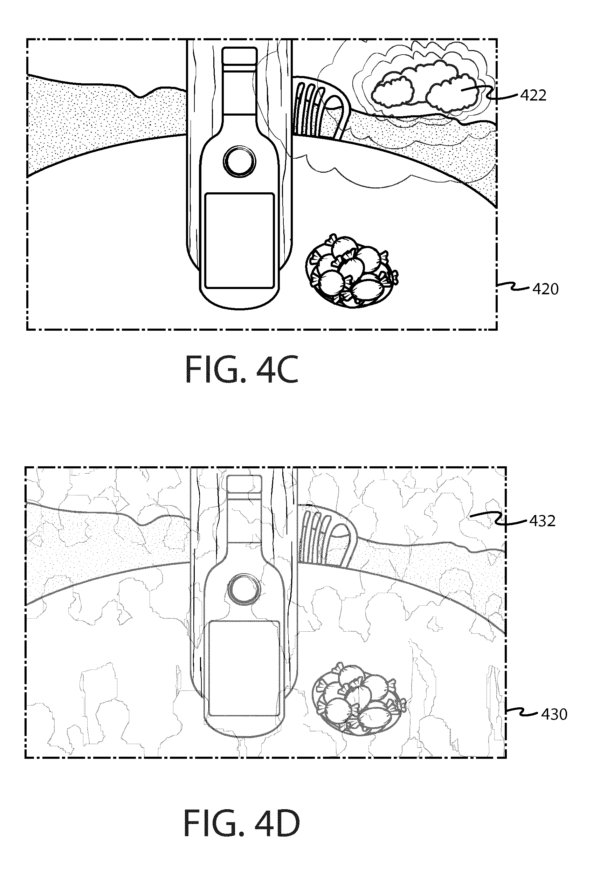

FIGURE 4C is an illustration showing a recipient image according to at least one example embodiment. In at least one example embodiment, recipient image 420 was generated based, at least in part, on capture image 400 of FIGURE 4A. For example, recipient image 420 may represent capture image 400 of FIGURE 4A subsequent to the addition of categorical contextual information difference indicator 422. As can be seen in the example of FIGURE 4C, categorical contextual information difference indicator 422 comprises visual information indicative of a cloud and a radiant darkening effect that spans half of recipient image 420. In at least one example embodiment, capture image 400 of FIGURE 4A is associated with categorical contextual information table 300 of FIGURE 3, and recipient image 420 is associated with categorical contextual information table 320 of FIGURE 3. In such an example embodiment, category 304 of FIGURE 3 may be weather capture contextual information that indicates value 305 of FIGURE 3, dark and stormy cloud coverage. In such an example embodiment, category 324 of FIGURE 3 may be weather recipient contextual information that indicates value 325 of FIGURE 3, sunny with clouds. In such an example embodiment, recipient image 420 may comprise categorical contextual information difference indicator 422 based, at least in part, on the determination that value 305 of FIGURE 3 differs from value 325 of FIGURE 3 beyond the categorical contextual information difference threshold. In at least one example embodiment, the level of emphasis placed on categorical contextual information difference indicator 422 may be based, at least in part, on a magnitude of difference between value 305 of FIGURE 3 and value 325 of FIGURE 3. As such, a smaller difference between value 305 of FIGURE 3 and value 325 of FIGURE 3 may result in a lower level of emphasis placed on categorical contextual information difference indicator 422, and a larger difference between value 305 of FIGURE 3 and value 325 of FIGURE 3 may result in a higher level of emphasis placed on categorical contextual information difference indicator 422. As such, the level of emphasis placed on categorical contextual information difference indicator 422 being less than the lever of emphasis placed on categorical contextual information difference indicator 412 of FIGURE 4B may indicate that the difference between value 305 of FIGURE 3 and value 325 of FIGURE 3 is smaller than the different between value 305 of FIGURE 3 and value 315 of FIGURE 3.

In at least one example embodiment, the contextual information is temperature contextual information. In such an example embodiment, the categorical contextual information difference threshold associated with temperature contextual information may be an amount of difference between a temperature capture contextual information and a temperature recipient contextual information, beyond which, the recipient image is generated such that the recipient image comprises a categorical contextual information difference indicator associated with the temperature capture contextual information. For example, comparing 32 degrees Celsius and 31 degrees Celsius may fail to satisfy the categorical contextual information difference threshold associated with temperature contextual information, and comparing 32 degrees Celsius to -8 degrees Celsius may satisfy the categorical contextual information difference threshold associated with temperature contextual information. The categorical contextual information difference indicator associated with temperature contextual information may comprise visual information that depicts a sun, a snow flake, a warm red glow, a cool blue glow, a frost effect, a fire effect, and/or the like. As such, the temperature contextual information difference indicator may indicate the temperature capture contextual information by way of visual information comprised by the recipient image. In at least one example embodiment, the temperature capture contextual information is associated with auditory information in addition to the corresponding categorical contextual information difference indicator. For example, the auditory information associated with the temperature capture contextual information may be auditory information indicative of a fire crackling, a brisk cold wind blowing, and/or the like.

In at least one example embodiment, the contextual information is social contextual information. In such an example embodiment, the categorical contextual information difference threshold associated with social contextual information may be an amount of difference between a social capture contextual information and a social recipient contextual information, beyond which, the recipient image is generated such that the recipient image comprises a categorical contextual information difference indicator associated with the social capture contextual information. The categorical contextual information difference indicator associated with social contextual information may comprise visual information that depicts an identified person, emphasizes the identified person within the recipient image, and/or the like. As such, the social contextual information difference indicator may indicate the social capture contextual information by way of visual information comprised by the recipient image. In at least one example embodiment, the social capture contextual information is associated with auditory information in addition to the corresponding categorical contextual information difference indicator. For example, the auditory information associated with the social capture contextual information may be auditory information indicative of the identified person talking, a song associated with the identified person, and/or the like.

In at least one example embodiment, the contextual information is crowdedness contextual information. In such an example embodiment, the categorical contextual information difference threshold associated with crowdedness contextual information may be an amount of difference between a crowdedness capture contextual information and a crowdedness recipient contextual information, beyond which, the recipient image is generated such that the recipient image comprises a categorical contextual information difference indicator associated with the crowdedness capture contextual information. For example, a difference between very crowded and extremely crowded may fail to satisfy the categorical contextual information difference threshold associated with crowdedness contextual information, and a difference between somewhat crowd and extremely crowded may satisfy the categorical contextual information difference threshold associated with crowdedness contextual information. The categorical contextual information difference indicator associated with crowdedness contextual information may comprise visual information that depicts a large crowd, an overlay of a crowd, a tumbleweed, and/or the like. As such, the crowdedness contextual information difference indicator may indicate the crowdedness capture contextual information by way of visual information comprised by the recipient image. In at least one example embodiment, the crowdedness capture contextual information is associated with auditory information in addition to the corresponding categorical contextual information difference indicator. For example, the auditory information associated with the crowdedness capture contextual information may be auditory information indicative of a whispering voices, clamoring shouts, and/or the like.

FIGURE 4D is an illustration showing a recipient image according to at least one example embodiment. In at least one example embodiment, recipient image 430 was generated based, at least in part, on capture image 400 of FIGURE 4A. For example, recipient image 430 may represent capture image 400 of FIGURE 4A subsequent to the addition of categorical contextual information difference indicator 432. As can be seen in the example of FIGURE 4D, categorical contextual information difference indicator 432 comprises visual information indicative of a crowd overlay effect that spans the entirety of recipient image 430. In at least one example embodiment, capture image 400 of FIGURE 4A is associated with categorical contextual information table 300 of FIGURE 3, and recipient image 430 is associated with categorical contextual information table 310 of FIGURE 3. In such an example embodiment, category 306 of FIGURE 3 may be crowdedness capture contextual information that indicates value 307 of FIGURE 3, extremely crowded surroundings. In such an example embodiment, category 316 of FIGURE 3 may be crowdedness recipient contextual information that indicates value 317 of FIGURE 3, uncrowded surroundings. In such an example embodiment, recipient image 430 may comprise categorical contextual information difference indicator 432 based, at least in part, on the determination that value 307 of FIGURE 3 differs from value 317 of FIGURE 3 beyond the categorical contextual information difference threshold. In at least one example embodiment, the level of emphasis placed on categorical contextual information difference indicator 432 may be based, at least in part, on a magnitude of difference between value 307 of FIGURE 3 and value 317 of FIGURE 3. As such, a smaller difference between value 307 of FIGURE 3 and value 317 of FIGURE 3 may result in a lower level of emphasis placed on categorical contextual information difference indicator 432, and a larger difference between value 307 of FIGURE 3 and value 317 of FIGURE 3 may result in a higher level of emphasis placed on categorical contextual information difference indicator 432.

In at least one example embodiment, the contextual information is auditory contextual information. In such an example embodiment, the categorical contextual information difference threshold associated with auditory contextual information may be an amount of difference between a auditory capture contextual information and a auditory recipient contextual information, beyond which, the recipient image is generated such that the recipient image comprises a categorical contextual information difference indicator associated with the auditory capture contextual information. For example, a difference between a light murmur and a low rumbling may fail to satisfy the categorical contextual information difference threshold associated with auditory contextual information, and a difference between 42 decibels and 71 decibels may satisfy the categorical contextual information difference threshold associated with auditory contextual information. The categorical contextual information difference indicator associated with auditory contextual information may comprise visual information that depicts a speaker, a vibration effect, a sound wave effect, a music note, and/or the like. As such, the auditory contextual information difference indicator may indicate the auditory capture contextual information by way of visual information comprised by the recipient image. In at least one example embodiment, the auditory capture contextual information is associated with auditory information in addition to the corresponding categorical contextual information difference indicator. For example, the auditory information associated with the auditory capture contextual information may be auditory information indicative of the auditory contextual information, a low whispering sound, and/or the like.

In at least one example embodiment, the contextual information is time contextual information. In such an example embodiment, the categorical contextual information difference threshold associated with time contextual information may be an amount of difference between a time capture contextual information and a time recipient contextual information, beyond which, the recipient image is generated such that the recipient image comprises a categorical contextual information difference indicator associated with the time capture contextual information. For example, a difference between 13:45 and 14:15 may fail to satisfy the categorical contextual information difference threshold associated with time contextual information, and a difference between 12:30 and 22:30 may satisfy the categorical contextual information difference threshold associated with time contextual information. The categorical contextual information difference indicator associated with time contextual information may comprise visual information that depicts a sunrise, a sunset, a dark sky, a low sun, a high sun, and/or the like. As such, the time contextual information difference indicator may indicate the time capture contextual information by way of visual information comprised by the recipient image. In at least one example embodiment, the time capture contextual information is associated with auditory information in addition to the corresponding categorical contextual information difference indicator. For example, the auditory information associated with the time capture contextual information may be auditory information indicative of a tweeting birds, hooting owls, and/or the like.

In at least one example embodiment, the contextual information is mood contextual information. In such an example embodiment, the categorical contextual information difference threshold associated with mood contextual information may be an amount of difference between a mood capture contextual information and a mood recipient contextual information, beyond which, the recipient image is generated such that the recipient image comprises a categorical contextual information difference indicator associated with the mood capture contextual information. For example, a difference between excited and elated may fail to satisfy the categorical contextual information difference threshold associated with mood contextual information, and a difference between sad and happy may satisfy the categorical contextual information difference threshold associated with mood contextual information. The categorical contextual information difference indicator associated with mood contextual information may comprise visual information that depicts a bright sun, a cloud, a yellow glow effect, a blue glow effect, and/or the like. As such, the mood contextual information difference indicator may indicate the mood capture contextual information by way of visual information comprised by the recipient image. In at least one example embodiment, the mood capture contextual information is associated with auditory information in addition to the corresponding categorical contextual information difference indicator. For example, the auditory information associated with the mood capture contextual information may be auditory information indicative of upbeat music, downbeat music, and/or the like.

In at least one example embodiment, the contextual information is location contextual information. In such an example embodiment, the categorical contextual information difference threshold associated with location contextual information may be an amount of difference between a location capture contextual information and a location recipient contextual information, beyond which, the recipient image is generated such that the recipient image comprises a categorical contextual information difference indicator associated with the location capture contextual information. For example, a difference between Paris, France and Nice, France may fail to satisfy the categorical contextual information difference threshold associated with location contextual information, and a difference between Paris, France and the Caribbean may satisfy the categorical contextual information difference threshold associated with location contextual information. For example, the categorical contextual information difference threshold may be a number of kilometers, beyond which, the categorical contextual information difference threshold is satisfied. The categorical contextual information difference indicator associated with location contextual information may comprise visual information that depicts a location of a globe, a representation of the distance between the location indicated by the location capture contextual information and the location indicated by the location recipient contextual information, and/or the like. As such, the location contextual information difference indicator may indicate the location capture contextual information by way of visual information comprised by the recipient image. In at least one example embodiment, the location capture contextual information is associated with auditory information in addition to the corresponding categorical contextual information difference indicator. For example, the auditory information associated with the location capture contextual information may be auditory information indicative of a Caribbean music, French music, and/or the like.

In at least one example embodiment, the contextual information is altitude contextual information. In such an example embodiment, the categorical contextual information difference threshold associated with altitude contextual information may be an amount of difference between a altitude capture contextual information and an altitude recipient contextual information, beyond which, the recipient image is generated such that the recipient image comprises a categorical contextual information difference indicator associated with the altitude capture contextual information. For example, a difference between sea level and 10 meters above sea level may fail to satisfy the categorical contextual information difference threshold associated with altitude contextual information, and a difference between sea level and 1323 meters above sea level may satisfy the categorical contextual information difference threshold associated with altitude contextual information. The categorical contextual information difference indicator associated with altitude contextual information may comprise visual information that depicts a location of a globe, a representation of the altitude difference between the altitude indicated by the altitude capture contextual information and the altitude indicated by the altitude recipient contextual information, and/or the like. As such, the altitude contextual information difference indicator may indicate the altitude capture contextual information by way of visual information comprised by the recipient image. In at least one example embodiment, the altitude capture contextual information is associated with auditory information in addition to the corresponding categorical contextual information difference indicator. For example, the auditory information associated with the altitude capture contextual information may be auditory information indicative of a roaring waves, whistling wind, and/or the like.

In at least one example embodiment, the contextual information is speed contextual information. In such an example embodiment, the categorical contextual information difference threshold associated with speed contextual information may be an amount of difference between a speed capture contextual information and a speed recipient contextual information, beyond which, the recipient image is generated such that the recipient image comprises a categorical contextual information difference indicator associated with the speed capture contextual information. For example, a difference between 4 kilometers per hour and 6 kilometers per hour may fail to satisfy the categorical contextual information difference threshold associated with speed contextual information, and a difference between 7 kilometers per hour and 43 kilometers per hour may satisfy the categorical contextual information difference threshold associated with speed contextual information. The categorical contextual information difference indicator associated with speed contextual information may comprise visual information that depicts a bicycle, an airplane, a train, running shoes, a blur effect, and/or the like. As such, the speed contextual information difference indicator may indicate the speed capture contextual information by way of visual information comprised by the recipient image. In at least one example embodiment, the speed capture contextual information is associated with auditory information in addition to the corresponding categorical contextual information difference indicator. For example, the auditory information associated with the speed capture contextual information may be auditory information indicative of a roaring engine, a slow walk, a brisk run, and/or the like.

In at least one example embodiment, the contextual information is hurriedness contextual information. In such an example embodiment, the categorical contextual information difference threshold associated with hurriedness contextual information may be an amount of difference between a hurriedness capture contextual information and a hurriedness recipient contextual information, beyond which, the recipient image is generated such that the recipient image comprises a categorical contextual information difference indicator associated with the hurriedness capture contextual information. For example, a difference between a completely booked schedule and a mostly booked schedule may fail to satisfy the categorical contextual information difference threshold associated with hurriedness contextual information, and a difference between an empty appointment book and a full calendar book may satisfy the categorical contextual information difference threshold associated with hurriedness contextual information. The categorical contextual information difference indicator associated with hurriedness contextual information may comprise visual information that depicts a blur effect, a throbbing effect, a pile of papers, and/or the like. As such, the hurriedness contextual information difference indicator may indicate the hurriedness capture contextual information by way of visual information comprised by the recipient image. In at least one example embodiment, the hurriedness capture contextual information is associated with auditory information in addition to the corresponding categorical contextual information difference indicator. For example, the auditory information associated with the hurriedness capture contextual information may be auditory information indicative of face tempo music, slow tempo music, and/or the like.

In at least one example embodiment, the contextual information is action contextual information. In such an example embodiment, the categorical contextual information difference threshold associated with action contextual information may be an amount of difference between an action capture contextual information and an action recipient contextual information, beyond which, the recipient image is generated such that the recipient image comprises a categorical contextual information difference indicator associated with the action capture contextual information. For example, a difference between jogging and running may fail to satisfy the categorical contextual information difference threshold associated with action contextual information, and a difference between walking and bicycling may satisfy the categorical contextual information difference threshold associated with action contextual information. The categorical contextual information difference indicator associated with action contextual information may comprise visual information that depicts a running shoe, a bicycle, a tennis racket, an automobile, and/or the like. As such, the action contextual information difference indicator may indicate the action capture contextual information by way of visual information comprised by the recipient image. In at least one example embodiment, the action capture contextual information is associated with auditory information in addition to the corresponding categorical contextual information difference indicator. For example, the auditory information associated with the action capture contextual information may be auditory information indicative of a honking vehicle, a cheering crowd, and/or the like.

In some circumstances, it may be desirable to generate a recipient image such that the recipient image comprises visual information indicative of more than one categorical contextual information difference indicator. For example, the recipient image may comprise visual information indicative of a categorical contextual information difference indicator associated with a category and visual information indicative of another categorical contextual information difference indicator associated with a another category.

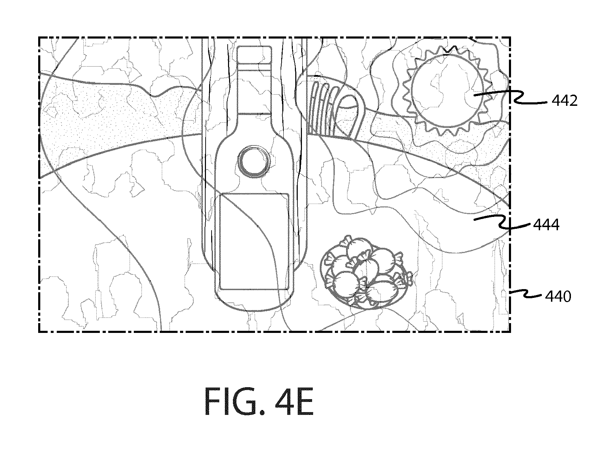

FIGURE 4E is an illustration showing a recipient image according to at least one example embodiment. In at least one example embodiment, recipient image 440 was generated based, at least in part, on capture image 400 of FIGURE 4A. For example, recipient image 440 may represent capture image 400 of FIGURE 4A subsequent to the addition of categorical contextual information difference indicators 442 and 444. As can be seen in the example of FIGURE 4E, categorical contextual information difference indicator 442 comprises visual information indicative of a sun and a glow effect that spans the entirety of recipient image 440, and categorical contextual information difference indicator 444 comprises visual information indicative of a crowd overlay effect that spans the entirety of recipient image 440. In at least one example embodiment, capture image 400 of FIGURE 4A is associated with categorical contextual information table 300 of FIGURE 3, and recipient image 440 is associated with categorical contextual information table 310 of FIGURE 3. In such an example embodiment, category 304 of FIGURE 3 may be weather capture contextual information that indicates value 305 of FIGURE 3, bright and sunny skies. In such an example embodiment, category 314 of FIGURE 3 may be weather recipient contextual information that indicates value 315 of FIGURE 3, dark and stormy skies. In such an example embodiment, recipient image 410 may comprise categorical contextual information difference indicator 412 based, at least in part, on the determination that value 305 of FIGURE 3 differs from value 315 of FIGURE 3 beyond the categorical contextual information difference threshold. In such an example embodiment, category 306 of FIGURE 3 may be crowdedness capture contextual information that indicates value 307 of FIGURE 3, extremely crowded surroundings. In such an example embodiment, category 316 of FIGURE 3 may be crowdedness recipient contextual information that indicates value 317 of FIGURE 3, uncrowded surroundings. In such an example embodiment, recipient image 430 may comprise categorical contextual information difference indicator 432 based, at least in part, on the determination that value 307 of FIGURE 3 differs from value 317 of FIGURE 3 beyond the categorical contextual information difference threshold.

In some circumstances, an apparatus may determine that categorical capture contextual information associated with a category fails to differ from categorical recipient contextual information associated with the category beyond a categorical contextual information difference threshold associated with the category. In such circumstances, it may be desirable to avoid inclusion of visual information indicative of a categorical contextual information difference indicator associated with the category in the recipient image. For example, capture contextual information may comprise categorical capture contextual information associated with a category and another categorical capture contextual information associated with another category, and recipient contextual information may comprise categorical recipient contextual information associated with the category and other categorical recipient contextual information associated with the other category. In such an example, the other category may be different from the category. In such an example, an apparatus may determine that the other categorical capture contextual information fails to differ from the other categorical recipient contextual information beyond another categorical contextual information difference threshold associated with the other category. As such, in such an example, generation of the recipient image may be performed such that the recipient image fails to comprise another categorical contextual information difference indicator that is based, at least in part, on the other categorical capture contextual information. The generation of the recipient image such that the recipient image fails to comprise the other categorical contextual information difference indicator may be based, at least in part, on the determination that the other categorical capture contextual information fails to differ from the other categorical recipient contextual information beyond another categorical contextual information difference threshold associated with the other category.

In some circumstances, a user may desire to send a recipient image to more than one recipient. In such circumstances, it may be desirable for the recipient image to comprise a categorical contextual information difference indicators that both recipients may find interesting, unique, different, and/or the like. For example, an apparatus may identify a recipient and another recipient to receive a representation of a capture image. In such an example, an apparatus may determine a recipient contextual information that comprises at least one categorical recipient contextual information indicative of environmental recipient contextual information or activity recipient contextual information. In such an example, the apparatus may determine another recipient contextual information that comprises another categorical recipient contextual information indicative of another environmental recipient contextual information or another activity recipient contextual information, and a different categorical recipient contextual information indicative of a different environmental recipient contextual information or a different activity recipient contextual information. In such an example, the other categorical recipient contextual information may be associated with the category and the different categorical recipient contextual information may be associated with a different category. As such, the generation of the recipient image may omit a different categorical contextual information difference indicator that is based, at least in part, on the different categorical recipient contextual information. The omission of the different categorical contextual information difference indicator may be based, at least in part, on the different category being different from the category. In such an example, the recipient image may nonetheless comprise visual information indicative of the categorical contextual information difference indicator based, at least in part, on the category associated with the categorical capture contextual information being the same as the category associated with the other categorical recipient contextual information.

In some circumstances, a user may desire to send a recipient image to multiple recipients in a manner that is easy and intuitive. In such circumstances, it may be desirable to avoid an overabundance of categorical contextual information difference indicators, which may overly obscure the underlying capture image. For example, an apparatus may identify three recipients to receive a representation of a capture image. In such an example, an apparatus may determine a categorical recipient contextual information that is associated with the largest difference between the categorical recipient contextual information and a corresponding categorical capture contextual information. For example, the apparatus may determine a difference between the categorical capture contextual information and a first categorical recipient contextual information, between the categorical capture contextual information and a second categorical recipient contextual information, and between the categorical capture contextual information and a third categorical recipient contextual information. In such an example, the categorical capture contextual information and the three categorical recipient contextual information may be associated with the same category, and the recipient image may be generated based, at least in part, on the largest difference between the categorical capture contextual information and the categorical recipient contextual information. In another example, the three categorical recipient contextual information may be associated with three different categories that correspond with categorical capture contextual information. In such an example, the recipient image may be generated based, at least in part, on the largest difference between the categorical capture contextual information associated with a category and the categorical recipient contextual information associated with the category. For example, if the largest difference is between weather contextual information, the recipient image may be generated such that the recipient image comprises visual information indicative of a categorical contextual information difference indicator associated with the weather contextual information. In another example, if the largest difference is between crowdedness contextual information, the recipient image may be generated such that the recipient image comprises visual information indicative of a categorical contextual information difference indicator associated with the crowdedness contextual information.

In at least one example embodiment, an apparatus causes sending of the recipient image to the recipient, sending of the recipient image to another recipient, and/or the like. The sending of the recipient image to the recipient may be based, at least in part, on the generation of the recipient image. For example, the sending of the recipient image to the recipient may be caused by the generation of the recipient image. In at least one example embodiment, an apparatus causes display of the recipient image. For example, the apparatus may display the recipient image on a display comprised by the apparatus, may cause a separate apparatus to display the recipient image, and/or the like. In at least one example embodiment, an apparatus receives information indicative of a recipient image acceptance input. In such an example embodiment, the causation of sending of the recipient image to the recipient may be based, at least in part, on the recipient image acceptance input. In at least one example embodiment, an apparatus causes sending of auditory information to the recipient. The auditory information may be associated with the categorical capture contextual information, a categorical contextual information difference indicator associated with the category, and/or the like. In such an example embodiment, the apparatus may identify the auditory information based, at least in part, on the categorical capture contextual information.

In some circumstances, capture contextual information and recipient contextual information may fail to differ from one another beyond all corresponding categorical contextual information difference thresholds. For example, contextual information associated with the capture image and contextual information associated with the recipient may be very similar, such that any differences between the two are nominal, uninteresting, and/or the like. In such circumstances, it may be desirable to preclude generation of a recipient image, preclude sending of the recipient image, and/or the like. In at least one example embodiment, an apparatus determines that categorical capture contextual information fails to differ from categorical recipient contextual information beyond a categorical contextual information difference threshold. In such an example embodiment, the apparatus may preclude generation of another recipient image based, at least in part, on the determination that the categorical capture contextual information fails to differ from the other categorical recipient contextual information beyond the other categorical contextual information difference threshold. In such an example embodiment, the apparatus may preclude causation of sending the capture image to the recipient based, at least in part, on the determination that the categorical capture contextual information fails to differ from the other categorical recipient contextual information beyond the other categorical contextual information difference threshold. In such circumstances, the user may nonetheless desire to share the capture image with the recipient, notwithstanding the preclusion of generation of the recipient image and/or the preclusion of sending of the recipient image to the recipient. In at least one example embodiment, an apparatus causes sending the capture image to the recipient.

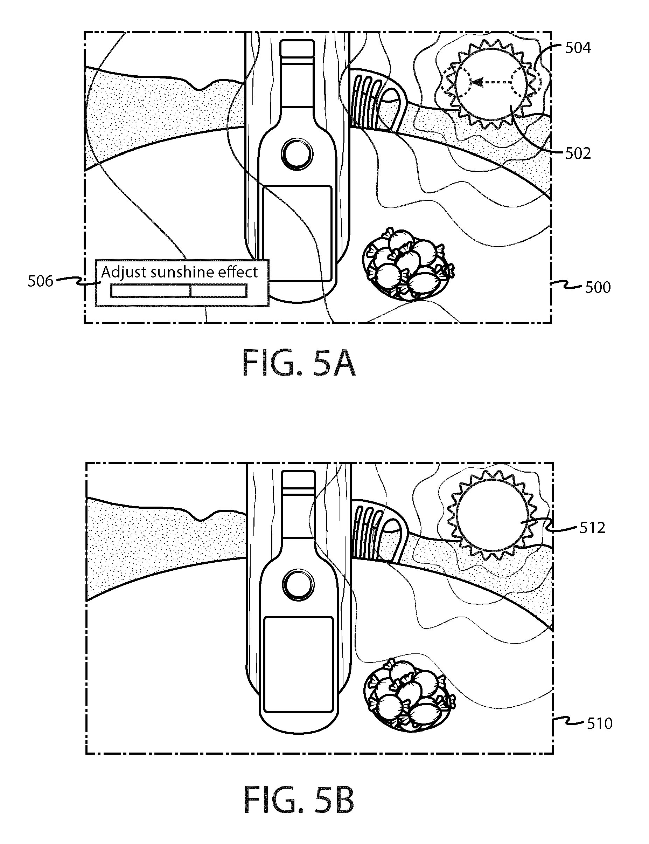

FIGURES 5A-5B are illustrations showing a categorical contextual information difference indicator adjustment input according to at least one example embodiment. The examples of FIGURES 5A-5B are merely examples and do not limit the scope of the claims. For example, capture image may vary, recipient images may vary, categorical contextual information difference indicator adjustment input may vary, and/or the like.

In some circumstances, a user may desire the ability to adjust the level of emphasis that may be placed on categorical capture contextual information that is different from categorical recipient contextual information. For example, the user may desire to increase the emphasis of a categorical contextual information difference indicator, decrease the emphasis of a categorical contextual information difference indicator, increase the emphasis of a categorical contextual information difference indicator and decrease the emphasis of another categorical contextual information difference indicator, and/or the like. In at least one example embodiment, an apparatus causes display of a categorical contextual information difference indicator adjustment interface in relation to a recipient image. In at least one example embodiment, an apparatus receives information indicative of a categorical contextual information difference indicator adjustment input. In such an example embodiment, the recipient image may be based, at least in part, on the categorical contextual information difference indicator adjustment input. In such an example embodiment, the categorical contextual information difference indicator adjustment input may be at a position on a display that at least partially corresponds with a display position of the categorical contextual information difference indicator adjustment interface on the display. In at least one example embodiment, the categorical contextual information difference indicator adjustment input is at a position on a display that at least partially corresponds with a display position of a categorical contextual information difference indicator on the display. In such an example embodiment, the categorical contextual information difference indicator is the categorical contextual information difference indicator that is being adjusted by the categorical contextual information difference indicator adjustment input.

FIGURE 5A is an illustration showing a categorical contextual information difference indicator adjustment input according to at least one example embodiment. The example of FIGURE 5A depicts recipient image 500. Recipient image 500 comprises visual information indicative of categorical contextual information difference indicator 502. As can be seen in the example of FIGURE 5A, categorical contextual information difference indicator 502 comprises visual information indicative of a sun and a radiant glow effect that spans the entirety of recipient image 500. In the example of FIGURE 5A, categorical contextual information difference indicator adjustment interface 506 is displayed in relation to recipient image 500. Categorical contextual information difference indicator adjustment interface 506 may depict a current level of emphasis associated with categorical contextual information difference indicator 502. As illustrated, categorical contextual information difference indicator adjustment input 504 is at a position that corresponds with the position of categorical contextual information difference indicator 502. In the example of FIGURE 5A, a right to left swipe input may instruct the apparatus to reduce the level of emphasis placed on categorical contextual information difference indicator 502, and a left to right swipe input may instruct the apparatus to increase the level of emphasis placed on categorical contextual information difference indicator 502. In the example of FIGURE 5A, categorical contextual information difference indicator adjustment input 504 is a right to left swipe input across categorical contextual information difference indicator 502.

FIGURE 5B is an illustration showing a recipient image according to at least one example embodiment. The example of FIGURE 5B depicts the scenario illustrated in FIGURE 5A subsequent to receipt of categorical contextual information difference indicator adjustment input 504 of FIGURE 5A, which was a right to left swipe input that indicated a desire for the apparatus to reduce the level of emphasis placed on categorical contextual information difference indicator 502 of FIGURE 5A. Recipient image 510 in FIGURE 5B corresponds with recipient image 500 of FIGURE 5A, and categorical contextual information difference indicator 512 of FIGURE 5B corresponds with categorical contextual information difference indicator 502 of FIGURE 5A. As can be seen in the example of FIGURE 5B, categorical contextual information difference indicator 512 comprises visual information indicative of a sun and a radiant glow effect that spans the roughly half of recipient image 510. The level of emphasis placed on categorical contextual information difference indicator 512 of FIGURE 5B has been reduced in comparison to categorical contextual information difference indicator 502 of FIGURE 5A based, at least in part, on receipt of categorical contextual information difference indicator adjustment input 504 of FIGURE 5A.

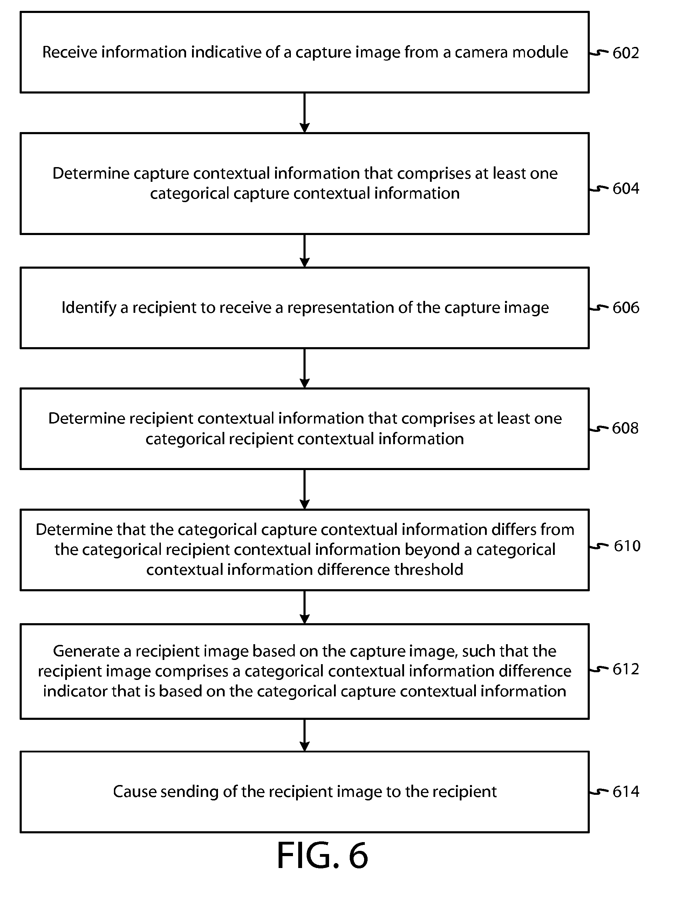

FIGURE 6 is a flow diagram illustrating activities associated with causation of sending of a recipient image to a recipient according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

At block 602, the apparatus receives information indicative of a capture image from a camera module. The receipt, the capture image, and the camera module may be similar as described regarding FIGURES 4A-4E.

At block 604, the apparatus determines capture contextual information. The capture contextual information comprises at least one categorical capture contextual information indicative of environmental capture contextual information at a time of receipt of the capture image or activity capture contextual information at the time of receipt of the capture image. The determination, the capture contextual information, the categorical capture contextual information, the environmental capture contextual information, the activity capture contextual information, and the time of receipt of the capture image may be similar as described regarding FIGURE 3 and FIGURES 4A-4E.

At block 606, the apparatus identifies a recipient to receive a representation of the capture image. The identification, the recipient, and the representation of the capture image may be similar as described regarding FIGURE 2, FIGURE 3, FIGURES 4A-4E, and FIGURES 5A-5B.

At block 608, the apparatus determines recipient contextual information. The recipient contextual information comprises at least one categorical recipient contextual information indicative of environmental recipient contextual information or activity recipient contextual information. The determination, the recipient contextual information, the categorical recipient contextual information, the environmental recipient contextual information, and the activity recipient contextual information may be similar as described regarding FIGURE 3 and FIGURES 4A-4E.

At block 610, the apparatus determines that the categorical capture contextual information differs from the categorical recipient contextual information beyond a categorical contextual information difference threshold. The determination and the categorical contextual information difference threshold may be similar as described regarding FIGURE 3 and FIGURES 4A-4E.

At block 612, the apparatus generates a recipient image based, at least in part, on the capture image. The recipient image is generated such that the recipient image comprises a categorical contextual information difference indicator that is based, at least in part, on the categorical capture contextual information. The generation, the recipient image, and the categorical contextual information difference indicator may be similar as described regarding FIGURE 3, FIGURES 4A-4E, and FIGURES 5A-5B.

At block 614, the apparatus causes sending of the recipient image to the recipient. The causation and the sending of the recipient image to the recipient may be similar as described regarding FIGURE 2, FIGURE 3, FIGURES 4A-4E, and FIGURES 5A-5B.

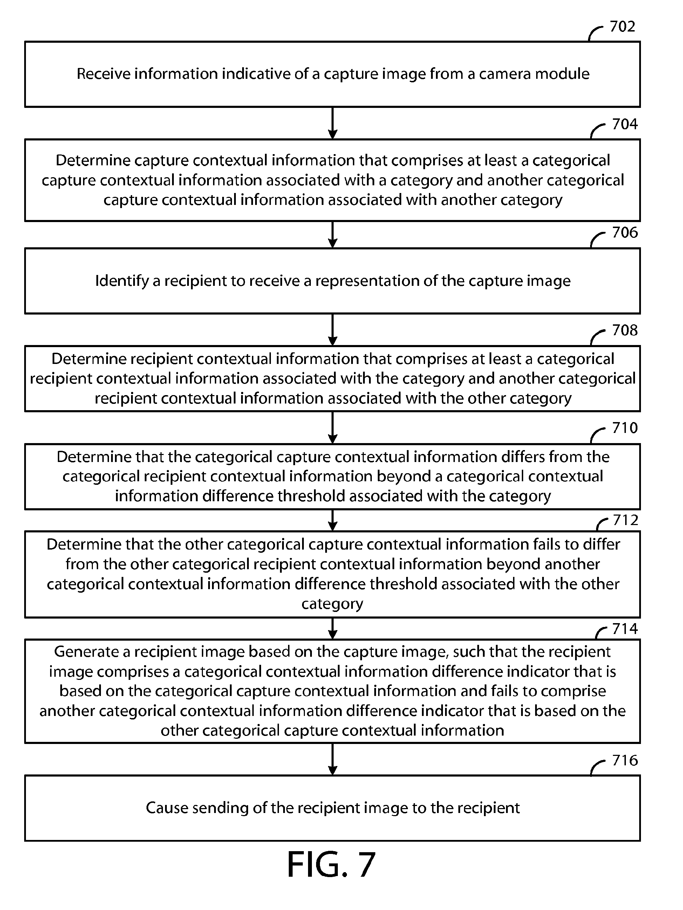

FIGURE 7 is a flow diagram illustrating activities associated with causation of sending of a recipient image to a recipient according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

As discussed previously, in many circumstances, a capture image may be associated with capture contextual information associated with more than one category, and a recipient may be associated with recipient contextual information associated with more than one category. In such circumstances, it may be desirable to generate a recipient image such that the recipient image comprises a categorical contextual information difference indicator for those categories in which the categorical capture contextual information differs from the categorical recipient contextual information beyond a categorical contextual information different threshold associated with the respective category.

At block 702, the apparatus receives information indicative of a capture image from a camera module. The receipt, the capture image, and the camera module may be similar as described regarding FIGURES 4A-4E.

At block 704, the apparatus determines capture contextual information. The capture contextual information comprises at least a categorical capture contextual information associated with a category and another categorical capture contextual information associated with another category. The determination, the capture contextual information, the categorical capture contextual information, the category, the other categorical capture contextual information, and the other category may be similar as described regarding FIGURE 3 and FIGURES 4A-4E.

At block 706, the apparatus identifies a recipient to receive a representation of the capture image. The identification, the recipient, and the representation of the capture image may be similar as described regarding FIGURE 2, FIGURE 3, FIGURES 4A-4E, and FIGURES 5A-5B.

At block 708, the apparatus determines recipient contextual information. The recipient contextual information comprises at least a categorical recipient contextual information associated with the category and another categorical recipient contextual information associated with the other category. The determination, the recipient contextual information, the categorical recipient contextual information, and the other categorical recipient contextual information may be similar as described regarding FIGURE 3 and FIGURES 4A-4E.

At block 710, the apparatus determines that the categorical capture contextual information differs from the categorical recipient contextual information beyond a categorical contextual information difference threshold associated with the category. The determination and the categorical contextual information difference threshold may be similar as described regarding FIGURE 3 and FIGURES 4A-4E.

At block 712, the apparatus determines that the other categorical capture contextual information fails to differ from the other categorical recipient contextual information beyond another categorical contextual information difference threshold associated with the other category. The determination and the other categorical contextual information difference threshold may be similar as described regarding FIGURE 3 and FIGURES 4A-4E.

At block 714, the apparatus generates a recipient image based, at least in part, on the capture image. The recipient image is generated such that the recipient image comprises a categorical contextual information difference indicator that is based, at least in part, on the categorical capture contextual information, and fails to comprise another categorical contextual information difference indicator that is based, at least in part, on the other categorical capture contextual information. The generation, the recipient image, the categorical contextual information difference indicator, and the other categorical contextual information difference indicator may be similar as described regarding FIGURE 3, FIGURES 4A-4E, and FIGURES 5A-5B.

At block 716, the apparatus causes sending of the recipient image to the recipient. The causation and the sending of the recipient image to the recipient may be similar as described regarding FIGURE 2, FIGURE 3, FIGURES 4A-4E, and FIGURES 5A-5B.

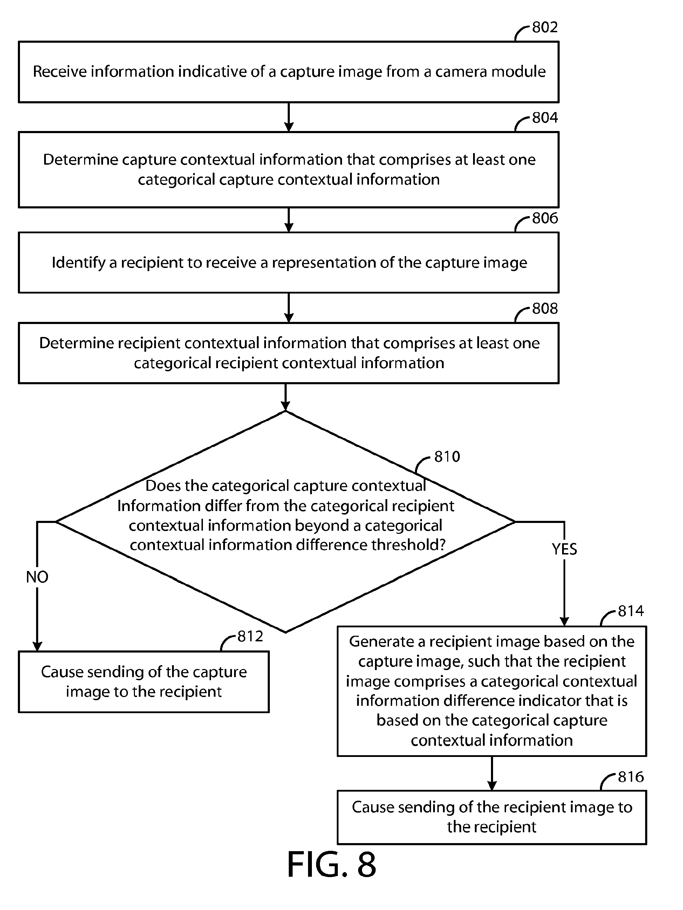

FIGURE 8 is a flow diagram illustrating activities associated with causation of sending of a recipient image to a recipient according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

As discussed previously, in some circumstances, categorical contextual information associated with a capture image and a recipient may be similar. For example, categorical capture contextual information may fail to differ from categorical recipient contextual information beyond an associated categorical contextual information difference threshold. In such circumstances, a user may desire to avoid generation and/or sending of a recipient image based on the capture image. For example, the user may desire to avoid generation of and/or sending of the recipient image in circumstances in which categorical contextual information associated with the capture image and the recipient are similar, fail to differ beyond the categorical contextual information difference threshold, and/or the like. In such circumstances, the user may desire to instead send the capture image to the recipient.

At block 802, the apparatus receives information indicative of a capture image from a camera module. The receipt, the capture image, and the camera module may be similar as described regarding FIGURES 4A-4E.

At block 804, the apparatus determines capture contextual information. The capture contextual information comprises at least one categorical capture contextual information indicative of environmental capture contextual information at a time of receipt of the capture image or activity capture contextual information at the time of receipt of the capture image. The determination, the capture contextual information, the categorical capture contextual information, the environmental capture contextual information, the activity capture contextual information, and the time of receipt of the capture image may be similar as described regarding FIGURE 3 and FIGURES 4A-4E.

At block 806, the apparatus identifies a recipient to receive a representation of the capture image. The identification, the recipient, and the representation of the capture image may be similar as described regarding FIGURE 2, FIGURE 3, FIGURES 4A-4E, and FIGURES 5A-5B.

At block 808, the apparatus determines recipient contextual information. The recipient contextual information comprises at least one categorical recipient contextual information indicative of environmental recipient contextual information or activity recipient contextual information. The determination, the recipient contextual information, the categorical recipient contextual information, the environmental recipient contextual information, and the activity recipient contextual information may be similar as described regarding FIGURE 3 and FIGURES 4A-4E.

At block 810, the apparatus determines whether the categorical capture contextual information differs from the categorical recipient contextual information beyond a categorical contextual information difference threshold. If the categorical capture contextual information differs from the categorical recipient contextual information beyond the categorical contextual information difference threshold, flow proceeds to block 814. If the categorical capture contextual information fails to differ from the categorical recipient contextual information beyond the categorical contextual information difference threshold, flow proceeds to block 812. The determination and the categorical contextual information difference threshold may be similar as described regarding FIGURE 3 and FIGURES 4A-4E.

At block 812, the apparatus causes sending of the capture image to the recipient. In this manner, the causation of sending of the capture image to the recipient may be based, at least in part, on the determination that the categorical capture contextual information fails to differ from the categorical recipient contextual information beyond the categorical contextual information difference threshold. The causation and the sending of the capture image to the recipient may be similar as described regarding FIGURE 2, FIGURE 3, FIGURES 4A-4E, and FIGURES 5A-5B.

At block 814, the apparatus generates a recipient image based, at least in part, on the capture image. The recipient image is generated such that the recipient image comprises a categorical contextual information difference indicator that is based, at least in part, on the categorical capture contextual information. In this manner, the generation of the recipient image may be based, at least in part, on the determination that the categorical capture contextual information differs from the categorical recipient contextual information beyond the categorical contextual information difference threshold. The generation, the recipient image, and the categorical contextual information difference indicator may be similar as described regarding FIGURE 3, FIGURES 4A-4E, and FIGURES 5A-5B.

At block 816, the apparatus causes sending of the recipient image to the recipient. The causation and the sending of the recipient image to the recipient may be similar as described regarding FIGURE 2, FIGURE 3, FIGURES 4A-4E, and FIGURES 5A-5B.

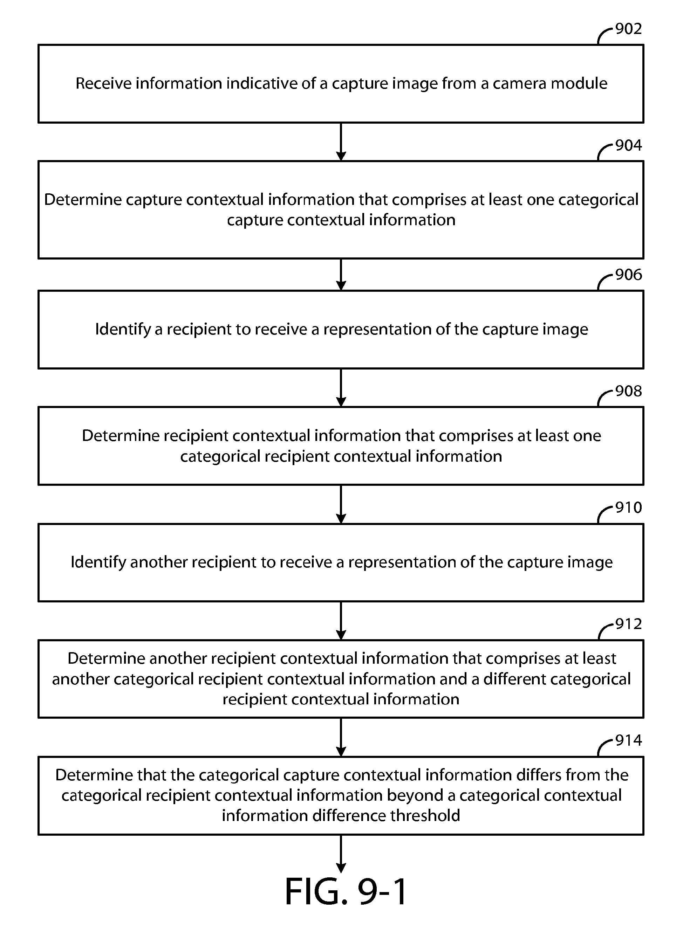

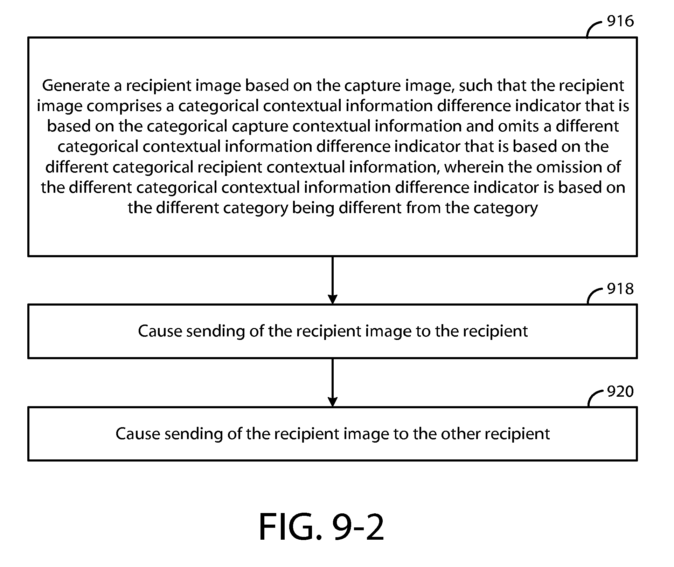

FIGURE 9 is a flow diagram illustrating activities associated with causation of sending of a recipient image to a recipient according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

As discussed previously, in some circumstances, a user may desire to generate a recipient image and to send the recipient image to more than one recipient. For example, the user may desire to generate a recipient image and to send the recipient image to two recipients. In such an example, the user may desire that the generated recipient image comprises categorical contextual information difference indicators associated with categories that are common to the two recipients, and omits categorical contextual information difference indicators associated with categories that are uncommon to the two recipients.

At block 902, the apparatus receives information indicative of a capture image from a camera module. The receipt, the capture image, and the camera module may be similar as described regarding FIGURES 4A-4E.

At block 904, the apparatus determines capture contextual information. The capture contextual information comprises at least one categorical capture contextual information indicative of environmental capture contextual information at a time of receipt of the capture image or activity capture contextual information at the time of receipt of the capture image. In at least one example embodiment, the categorical capture contextual information is associated with a category. The determination, the capture contextual information, the categorical capture contextual information, the environmental capture contextual information, the activity capture contextual information, the time of receipt of the capture image, and the category may be similar as described regarding FIGURE 3 and FIGURES 4A-4E.

At block 906, the apparatus identifies a recipient to receive a representation of the capture image. The identification, the recipient, and the representation of the capture image may be similar as described regarding FIGURE 2, FIGURE 3, FIGURES 4A-4E, and FIGURES 5A-5B.

At block 908, the apparatus determines recipient contextual information. The recipient contextual information comprises at least one categorical recipient contextual information indicative of environmental recipient contextual information or activity recipient contextual information. In at least one example embodiment, the categorical recipient contextual information is associated with the category. The determination, the recipient contextual information, the categorical recipient contextual information, the environmental recipient contextual information, and the activity recipient contextual information may be similar as described regarding FIGURE 3 and FIGURES 4A-4E.

At block 910, the apparatus identifies another recipient to receive a representation of the capture image. The identification, the other recipient, and the representation of the capture image may be similar as described regarding FIGURE 2, FIGURE 3, FIGURES 4A-4E, and FIGURES 5A-5B.

At block 912, the apparatus determines another recipient contextual information. The other recipient contextual information comprises another categorical recipient contextual information indicative of another environmental recipient contextual information or another activity recipient contextual information and a different categorical recipient contextual information indicative of a different environmental recipient contextual information or a different activity recipient contextual information. In at least one example embodiment, the other categorical recipient contextual information is associated with the category and the different categorical recipient contextual information is associated with a different category. The determination, the other recipient contextual information, the other categorical recipient contextual information, the other environmental recipient contextual information, the other activity recipient contextual information, the different categorical recipient contextual information, the different environmental recipient contextual information, the different activity recipient contextual information, and the different category may be similar as described regarding FIGURE 3 and FIGURES 4A-4E.

At block 914, the apparatus determines that the categorical capture contextual information differs from the categorical recipient contextual information beyond a categorical contextual information difference threshold. The determination and the categorical contextual information difference threshold may be similar as described regarding FIGURE 3 and FIGURES 4A-4E.

At block 916, the apparatus generates a recipient image based, at least in part, on the capture image. The recipient image is generated such that the recipient image comprises a categorical contextual information difference indicator that is based, at least in part, on the categorical capture contextual information, and omits a different categorical contextual information difference indicator that is based, at least in part, on the different categorical capture contextual information. The omission of the different categorical contextual information difference indicator is based, at least in part, on the different category being different from the category. The generation, the recipient image, the categorical contextual information difference indicator, and the different categorical contextual information difference indicator may be similar as described regarding FIGURE 3, FIGURES 4A-4E, and FIGURES 5A-5B.

At block 918, the apparatus causes sending of the recipient image to the recipient. The causation and the sending of the recipient image to the recipient may be similar as described regarding FIGURE 2, FIGURE 3, FIGURES 4A-4E, and FIGURES 5A-5B.

At block 920, the apparatus causes sending of the recipient image to the other recipient. The causation and the sending of the recipient image to the other recipient may be similar as described regarding FIGURE 2, FIGURE 3, FIGURES 4A-4E, and FIGURES 5A-5B.

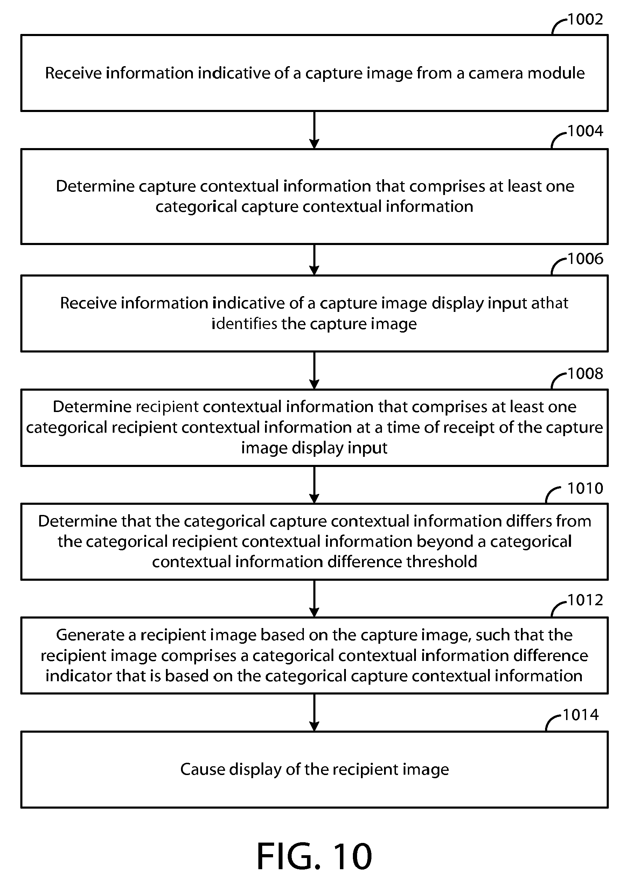

FIGURE 10 is a flow diagram illustrating activities associated with causation of sending of a recipient image to a recipient according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

In some circumstances, a user may capture an image and, subsequently, desire to view the captured image. In such circumstances, the user may desire to view the capture image, a recipient image that highlights any differences between capture contextual information at a time of capture of the capture image and contextual information associated with a time of viewing of the recipient image, and/or the like. In at least one example embodiment, an apparatus receives information indicative of a capture image from a camera module. The camera module may be comprised by the apparatus, by a separate apparatus, and/or the like. In such an example embodiment, the apparatus may determine capture contextual information that comprises at least one categorical capture contextual information indicative of environmental capture contextual information at a time of receipt of the capture image or activity capture contextual information at the time of receipt of the capture image.

In such an example embodiment, the user of the apparatus may subsequently desire to view a representation of the capture image. As such, the apparatus may receive information indicative of a capture image display input identifying the capture image. The capture image display input may indicate a user desire to display a representation of the capture image on a display. The apparatus may determine recipient contextual information that comprises at least one categorical recipient contextual information indicative of environmental recipient contextual information at a time of receipt of the capture image display input or activity recipient contextual information at the time of receipt of the capture image display input. As such, the recipient contextual information is indicative of apparatus context at the time of receipt of the capture image display input. In such an example embodiment, the apparatus may determine that the categorical capture contextual information differs from the categorical recipient contextual information beyond a categorical contextual information difference threshold, and generate a recipient image based, at least in part, on the capture image. The recipient image may be generated such that the recipient image comprises a categorical contextual information difference indicator that is based, at least in part, on the categorical capture contextual information. In this manner, the recipient image may emphasize differences between contextual information at the time of capture of the capture image and contextual information at the time of receipt of the capture image display input. In such an example embodiment, the apparatus may cause display of the recipient image. For example, the apparatus may display the recipient image on a display comprised by the apparatus, cause display of the recipient image on a separate apparatus, and/or the like. In at least one example embodiment, the camera module is comprised by an apparatus, and the causation of display of the recipient image comprises display of the recipient image by the apparatus.

At block 1002, the apparatus receives information indicative of a capture image from a camera module. The receipt, the capture image, and the camera module may be similar as described regarding FIGURES 4A-4E.

At block 1004, the apparatus determines capture contextual information. The capture contextual information comprises at least one categorical capture contextual information indicative of environmental capture contextual information at a time of receipt of the capture image or activity capture contextual information at the time of receipt of the capture image. The determination, the capture contextual information, the categorical capture contextual information, the environmental capture contextual information, the activity capture contextual information, and the time of receipt of the capture image may be similar as described regarding FIGURE 3 and FIGURES 4A-4E.

At block 1006, the apparatus receives information indicative of a capture image display input identifying the capture image.

At block 1008, the apparatus determines recipient contextual information. The recipient contextual information comprises at least one categorical recipient contextual information indicative of environmental recipient contextual information at a time of receipt of the capture image display input or activity recipient contextual information at the time of receipt of the capture image display input. The determination, the recipient contextual information, the categorical recipient contextual information, the environmental recipient contextual information, and the activity recipient contextual information may be similar as described regarding FIGURE 3 and FIGURES 4A-4E.

At block 1010, the apparatus determines that the categorical capture contextual information differs from the categorical recipient contextual information beyond a categorical contextual information difference threshold. The determination and the categorical contextual information difference threshold may be similar as described regarding FIGURE 3 and FIGURES 4A-4E.

At block 1012, the apparatus generates a recipient image based, at least in part, on the capture image. The recipient image is generated such that the recipient image comprises a categorical contextual information difference indicator that is based, at least in part, on the categorical capture contextual information. The generation, the recipient image, and the categorical contextual information difference indicator may be similar as described regarding FIGURE 3, FIGURES 4A-4E, and FIGURES 5A-5B.

At block 1014, the apparatus causes display of the recipient image. The causation and the display of the recipient image may be similar as described regarding FIGURE 2, FIGURE 3, FIGURES 4A-4E, and FIGURES 5A-5B.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 606 of FIGURE 6 may be performed after block 608 of FIGURE 6. Furthermore, if desired, one or more of the above-described functions may be optional or may be combined. For example, block 910 of FIGURE 9 may be optional and/or combined with block 906 of FIGURE 9.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
receiving information indicative of a capture image from a camera module;
determining capture contextual information that comprises at least one categorical capture contextual information indicative of environmental capture contextual information at a time of receipt of the capture image or activity capture contextual information at the time of receipt of the capture image;
identifying a recipient to receive a representation of the capture image;
determining recipient contextual information that comprises at least one categorical recipient contextual information indicative of environmental recipient contextual information or activity recipient contextual information;
determining that the categorical capture contextual information differs from the categorical recipient contextual information beyond a categorical contextual information difference threshold;
generating a recipient image based, at least in part, on the capture image, such that the recipient image comprises a categorical contextual information difference indicator that is based, at least in part, on the categorical capture contextual information; and
causing sending of the recipient image to the recipient.

2. The method of Claim 1, further comprising causing display of the recipient image on a display.

3. The method of Claim 2, further comprising receiving information indicative of a categorical contextual information difference indicator adjustment input, wherein the recipient image is based, at least in part, on the categorical contextual information difference indicator adjustment input.

4. The method of any of Claims 1-3, further comprising causing sending of auditory information to the recipient, wherein the auditory information is associated with the categorical capture contextual information.

5. The method of any of Claims 1-4, wherein the categorical contextual information difference threshold is associated with a category, the categorical capture contextual information is associated with the category, and the categorical recipient contextual information is associated with the category.

6. The method of Claim 5, wherein the capture contextual information comprises another categorical capture contextual information associated with another category and the recipient contextual information comprises another categorical recipient contextual information associated with the other category, and further comprising determining that the other categorical capture contextual information fails to differ from the other categorical recipient contextual information beyond another categorical contextual information difference threshold associated with the other category, wherein the generation of the recipient image is performed such that the recipient image fails to comprise another categorical contextual information difference indicator that is based, at least in part, on the other categorical capture contextual information.

7. The method of any of Claims 5-6, further comprising:
identifying of another recipient to receive another representation of the capture image;
determining another recipient contextual information that comprises another categorical recipient contextual information indicative of another environmental recipient contextual information or another activity recipient contextual information and a different categorical recipient contextual information indicative of a different environmental recipient contextual information or a different activity recipient contextual information, such that the other categorical recipient contextual information is associated with the category and the different categorical recipient contextual information is associated with a different category; and
causing sending of the recipient image to the other recipient.

8. The method of Claim 7, wherein the generation of the recipient image omits a different categorical contextual information difference indicator that is based, at least in part, on the different categorical recipient contextual information.

9. The method of Claim 8, wherein the omission of the different categorical contextual information difference indicator is based, at least in part, on the different category being different from the category.

10. The method of any of Claims 1-9, further comprising:
identifying another recipient to receive another representation of the capture image;
determining another recipient contextual information that comprises another categorical recipient contextual information indicative of another environmental recipient contextual information or another activity recipient contextual information; and
determining that the categorical capture contextual information fails to differ from the other categorical recipient contextual information beyond another categorical contextual information difference threshold.

11. The method of Claim 10, further comprising precluding generation of another recipient image based, at least in part, on the determination that the categorical capture contextual information fails to differ from the other categorical recipient contextual information beyond the other categorical contextual information difference threshold.

12. The method of any of Claims 1-11, further comprising:
receiving information indicative of a capture image view input identifying the capture image;
determining another recipient contextual information that comprises another categorical recipient contextual information indicative of another environmental recipient contextual information or another activity recipient contextual information;
determining that the categorical capture contextual information differs from the other categorical recipient contextual information beyond another categorical contextual information difference threshold;
generating another recipient image based, at least in part, on the capture image, such that the recipient image comprises another categorical contextual information difference indicator that is based, at least in part, on the categorical capture contextual information; and
causing display of the recipient image.

13. An apparatus comprising means for performing the method of any of the preceding claims.

14. The apparatus of Claim 13, wherein the means for performing the method comprise at least one processor and at least one memory, the memory comprising machine-readable instructions, that when executed cause the apparatus to perform the method of any of claims 1-12.

15. At least one computer readable medium comprising instructions that, when executed, perform the method of any of claims 1-12.
